# EUROPEAN PATENT APPLICATION

(11) **EP 4 804 620 A1**
(43) Date of publication of application: **09.09.2026**
(21) Application number: 24899290.1
(22) Date of filing: 30.07.2024
(51) Int. Cl.: H04W 36/00

(54) **CHANNEL SELECTION METHOD, ELECTRONIC DEVICE, CHIP SYSTEM, AND STORAGE MEDIUM**

(30) Priority: 04.12.2023 CN 202311659198
(71) Applicant: Honor Device Co., Ltd., Shenzhen, Guangdong 518040 (CN)
(72) Inventor: YAN, Shitao, Shenzhen, Guangdong 518040 (CN)
(74) Representative: Gill Jennings & Every LLP
(86) International application number: PCT/CN2024/108425
(87) International publication number: WO 2025/118640

(57) **Abstract**

This application provides a channel selection method, an electronic device, a chip system, and a storage medium. In the method, when a STA service of an electronic device is implemented by using a DFS channel, a Wi-Fi P2P service and/or a Wi-Fi hotspot service of the electronic device are/is also selected to be started on the DFS channel. In this way, not only an operating channel of the Wi-Fi P2P service and/or an operating channel of the Wi-Fi hotspot service can be made to conform to national regulations, but also concurrency efficiency of services of the electronic device can be ensured to be higher.

## Description

This application claims priority to Chinese Patent Application No. 202311659198.X, filed with the China National Intellectual Property Administration on December 4, 2023 and entitled "CHANNEL SELECTION METHOD, ELECTRONIC DEVICE, CHIP SYSTEM, AND STORAGE MEDIUM", which is incorporated herein by reference in its entirety.

### TECHNICAL FIELD

This application relates to the field of intelligent terminal technologies, and in particular, to a channel selection method, an electronic device, a chip system, and a storage medium.

### BACKGROUND

Wi-Fi (wirelessfidelity, wireless fidelity) is a wireless communication technology, and is an implementation of a WLAN (Wireless Local Area Network, wireless local area network). An electronic device having a Wi-Fi function may access a Wi-Fi wireless AP (Acess Ponit, access point), to become a STA (Station, station) of the Wi-Fi wireless AP.

Related functional services, such as a wireless screen projection service, a wireless mutual transmission service, and a smart household service, may be implemented between electronic devices based on a Wi-Fi peer-to-peer (peer-to-peer, P2P) connection.

When the electronic device accesses the Wi-Fi wireless AP and becomes the STA, the electronic device further establishes a Wi-Fi P2P connection with another device to perform a related P2P service. In this case, how to achieve higher concurrency efficiency of a STA service and a P2P service of the electronic device is a problem that needs to be resolved.

### SUMMARY

This application provides a channel selection method, an electronic device, a chip system, and a storage medium. In this method, a Wi-Fi P2P service may be started on a DFS channel with a STA service. This not only conforms to communication regulations, but also ensures higher concurrency efficiency of services of the electronic device.

According to a first aspect, an embodiment of this application provides a channel selection method. The method is applied to a first electronic device and includes:
The first electronic device determines whether the first electronic device currently has a station STA service when a Wi-Fi peer-to-peer P2P connection is established with a second electronic device; the first electronic device determines, when the first electronic device currently has a first STA service, that a bearer channel of the first STA service is a first channel, where the first channel is a dynamic frequency selection DFS channel; the first electronic device sends information of the first channel to the second electronic device; and the first electronic device establishes the Wi-Fi P2P connection with the second electronic device on the first channel.

For example, the first electronic device is a PC, and the second electronic device is a mobile phone.

In this way, when a STA service of an electronic device is implemented by using a DFS channel, a Wi-Fi P2P service of the electronic device is also selected to be started on the same DFS channel. This not only can enable an operating channel of the Wi-Fi P2P service to conform to national regulations, but also ensure higher concurrency efficiency of services of the electronic device.

According to a first aspect, the method further includes: The first electronic device receives first information sent by a wireless access point, where the first information indicates the first electronic device to switch the first STA service to a second channel, and the second channel is a non-DFS channel; the first electronic device switches the bearer channel of the first STA service to the second channel; the first electronic device sends second information to the second electronic device, where the second information indicates the second electronic device to switch a Wi-Fi P2P service to the second channel; and the Wi-Fi P2P service with the second electronic device is switched to the second channel.

For example, the first information is information including a channel switch announcement. For example, when an AP detects that there is radar signal interference in a frequency band of an operating channel on which the AP is located, the AP sends the channel switch announcement to a terminal device accessing the AP.

In this way, when a channel of the STA service of the first electronic device is switched, the first electronic device determines to switch a channel carrying the Wi-Fi P2P service, so that the STA service and the Wi-Fi P2P service of the first electronic device continue to be implemented on a same frequency and channel, and conformity of the channel of the Wi-Fi P2P service is ensured.

According to the first aspect or any implementation of the foregoing first aspect, the method further includes: The first electronic device determines that the first STA service is interrupted; the first electronic device selects a third channel, and sends third information to the second electronic device, where the third information indicates the second electronic device to switch the Wi-Fi P2P service to the third channel, and the third channel is a non-DFS channel; and the first electronic device switches the Wi-Fi P2P service with the second electronic device to the third channel.

After the STA service of the first electronic device is interrupted, the first electronic device cannot receive a radar signal repulsion event sent by the wireless access point, and therefore cannot learn whether there is radar signal interference to a current operating channel (that is, the DFS channel) of the Wi-Fi P2P service. Therefore, after it is determined that a connection between the first electronic device and the wireless access point is disconnected, the first electronic device reselects a legal operating channel for the Wi-Fi P2P service.

According to the first aspect or any implementation of the foregoing first aspect, that the first electronic device selects a third channel includes: The first electronic device selects a legal third channel based on country code information and a preset channel selection strategy.

According to the first aspect or any implementation of the foregoing first aspect, the method further includes:
The first electronic device determines, when the first electronic device currently has the first STA service, that the bearer channel of the first STA service is a fourth channel, where the fourth channel is a non-DFS channel; the first electronic device sends information of the fourth channel to the second electronic device; and the first electronic device establishes a Wi-Fi P2P connection with the second electronic device on the fourth channel.

In this way, when a bearer channel of the STA service of the first electronic device is a non-DFS channel, the Wi-Fi P2P service may also be started on the same non-DFS channel, so that the STA service and the Wi-Fi P2P service are implemented on a same frequency and channel.

According to the first aspect or any implementation of the foregoing first aspect, the method further includes:
The first electronic device selects a fifth channel based on country code information and a preset channel selection strategy when the first electronic device does not currently have the STA service, where the fifth channel is a non-DFS channel; the first electronic device sends information of the fifth channel to the second electronic device; and the first electronic device establishes a Wi-Fi P2P connection with the second electronic device on the fifth channel.

In this way, when the STA service does not exist, the Wi-Fi P2P service cannot be implemented on a same frequency and channel with the STA service. The first electronic device may select a legal and standard operating channel for the Wi-Fi P2P service based on the country code information and the preset channel selection strategy.

According to the first aspect or any implementation of the foregoing first aspect, after the first electronic device establishes the Wi-Fi P2P connection with the second electronic device on the fifth channel, the method further includes: The first electronic device accesses a wireless access point to perform a second STA service; the first electronic device determines that a bearer channel of the second STA service is a sixth channel; the first electronic device sends fourth information to the second electronic device, where the fourth information indicates the second electronic device to switch a Wi-Fi P2P service to the sixth channel; and the first electronic device switches the Wi-Fi P2P service with the second electronic device to the sixth channel.

In this way, before the Wi-Fi P2P service ends, if the STA service is started, a channel of the Wi-Fi P2P service can still be switched with a channel of the STA service, so that the STA service and the Wi-Fi P2P service of the first electronic device continue to be implemented on a same frequency and channel, and conformity of the channel of the Wi-Fi P2P service is ensured.

According to the first aspect or any implementation of the foregoing first aspect, the method further includes: The first electronic device switches the Wi-Fi P2P service with the second electronic device to a corresponding channel when the first electronic device switches the second STA service to another channel.

According to the first aspect or any implementation of the foregoing first aspect, the method further includes: When the second STA service of the first electronic device is interrupted, the first electronic device reselects a channel for the Wi-Fi P2P service, and switches the Wi-Fi P2P service with the second electronic device to the reselected channel.

According to the first aspect or any implementation of the foregoing first aspect, the sixth channel is a DFS channel or a non-DFS channel.

According to the first aspect or any implementation of the foregoing first aspect, the method further includes:

When starting a Wi-Fi hotspot service of the first electronic device, the first electronic device determines whether the first electronic device currently has the STA service; the first electronic device determines, when the first electronic device currently has a third STA service, that a bearer channel of the third STA service is a seventh channel, where the seventh channel is a DFS channel; the first electronic device broadcasts information of the seventh channel; and the first electronic device establishes a Wi-Fi hotspot connection with a third electronic device on the seventh channel.

In this way, when a STA service of an electronic device is implemented by using a DFS channel, a Wi-Fi hotspot service of the electronic device is also selected to be started on the same DFS channel. This not only can enable an operating channel of the Wi-Fi hotspot service to conform national regulations, but also ensure higher concurrency efficiency of services of the electronic device.

According to the first aspect or any implementation of the foregoing first aspect, the method further includes:
The first electronic device receives fifth information sent by a wireless access point, where the fifth information indicates the first electronic device to switch the third STA service to an eighth channel, and the eighth channel is a non-DFS channel; the first electronic device switches the bearer channel of the third STA service to the eighth channel; the first electronic device sends sixth information to the third electronic device, where the sixth information indicates the third electronic device to switch a Wi-Fi hotspot service to the eighth channel; and the first electronic device switches the Wi-Fi hotspot service with the second electronic device to the eighth channel.

For example, the fifth information is information including a channel switch announcement. For example, when an AP detects that there is radar signal interference in a frequency band of an operating channel on which the AP is located, the AP sends the channel switch announcement to a terminal device accessing the AP.

In this way, when a channel of the STA service of the first electronic device is switched, the first electronic device determines to switch a channel carrying the Wi-Fi hotspot service, so that the STA service and the Wi-Fi hotspot service of the first electronic device continue to be implemented on a same frequency and channel, and conformity of the channel of the Wi-Fi hotspot service is ensured.

According to the first aspect or any implementation of the foregoing first aspect, the method further includes: The first electronic device determines that the third STA service is interrupted; the first electronic device selects a ninth channel, and sends seventh information to the second electronic device, where the seventh information indicates the second electronic device to switch a Wi-F hotspot service to the ninth channel, and the ninth channel is a non-DFS channel; and the first electronic device switches the Wi-F hotspot service with the third electronic device to the ninth channel.

After the STA service of the first electronic device is interrupted, the first electronic device cannot receive a radar signal repulsion event sent by the wireless access point, and therefore cannot learn whether there is radar signal interference to a current operating channel (that is, the DFS channel) of the Wi-F hotspot service. Therefore, after it is determined that a connection between the first electronic device and the wireless access point is disconnected, the first electronic device reselects a legal operating channel for the Wi-F hotspot service.

According to the first aspect, or any implementation of the foregoing first aspect, the method further includes: The first electronic device selects a tenth channel based on country code information and a preset channel selection strategy when the first electronic device does not currently have the STA service, where the tenth channel is a non-DFS channel; the first electronic device broadcasts information of the tenth channel; and the first electronic device establishes a Wi-Fi hotspot connection with the third electronic device on the tenth channel.

In this way, when the STA service does not exist, the Wi-Fi hotspot service cannot be implemented on a same frequency and channel with the STA service. The first electronic device may select a legal and standard operating channel for the Wi-Fi hotspot service based on the country code information and the preset channel selection strategy.

According to the first aspect or any implementation of the foregoing first aspect, after the first electronic device establishes the Wi-Fi hotspot connection with the third electronic device, the method further includes: The first electronic device accesses a wireless access point to perform a fourth STA service; the first electronic device determines that a bearer channel of the fourth STA service is an eleventh channel; the first electronic device sends eighth information to the second electronic device, where the eighth information indicates the second electronic device to switch a Wi-Fi hotspot service to the eleventh channel; and the first electronic device switches the Wi-Fi hotspot service with the second electronic device to the eleventh channel.

According to a second aspect, an embodiment of this application provides an electronic device. The electronic device includes one or more processors, a memory, and one or more computer programs. The one or more computer programs are stored in the memory, and when the computer programs are executed by the one or more processors, the electronic device is enabled to perform the channel selection method according to any one of the first aspect and the first aspect.

According to the second aspect, the electronic device is a PC.

Any one of the second aspect and the implementations of the second aspect corresponds to any one of the first aspect and the implementations of the first aspect respectively. For technical effects corresponding to any one of the second aspect and the implementations of the second aspect, refer to the technical effects corresponding to any one of the first aspect and the implementations of the first aspect. Details are not described herein again.

According to a third aspect, an embodiment of this application provides a computer-readable storage medium. The computer-readable storage medium includes a computer program. When the computer program is run on an electronic device, the electronic device is enabled to perform the channel selection method according to any one of the first aspect and the first aspect.

Any one of the third aspect and the implementations of the third aspect corresponds to any one of the first aspect and the implementations of the first aspect respectively. For technical effects corresponding to any one of the third aspect and the implementations of the third aspect, refer to the technical effects corresponding to any one of the first aspect and the implementations of the first aspect. Details are not described herein again.

According to a fourth aspect, an embodiment of this application provides a chip system, used in an electronic device (for example, a PC). The chip system includes instructions and at least one processor. The at least one processor runs the instructions, to enable the PC to perform the channel selection method according to any one of the first aspect and the first aspect.

Any one of the fourth aspect and the implementations of the fourth aspect corresponds to any one of the first aspect and the implementations of the first aspect respectively. For technical effects corresponding to any one of the fourth aspect and the implementations of the fourth aspect, refer to the technical effects corresponding to any one of the first aspect and the implementations of the first aspect. Details are not described herein again.

According to a fifth aspect, an embodiment of this application provides a computer-readable storage medium. The computer-readable storage medium includes a computer program. When the computer program is run on an electronic device, the electronic device is enabled to perform the channel selection method according to any one of the first aspect and the first aspect.

Any one of the fifth aspect and the implementations of the fifth aspect corresponds to any one of the first aspect and the implementations of the first aspect respectively. For technical effects corresponding to any one of the fifth aspect and the implementations of the fifth aspect, refer to the technical effects corresponding to any one of the first aspect and the implementations of the first aspect. Details are not described herein again.

### BRIEF DESCRIPTION OF DRAWINGS

FIG. 1 shows an example application scenario of a Wi-Fi P2P service;
FIG. 2 shows an example application scenario in which an electronic device simultaneously performs a STA service and a Wi-Fi P2P service;
FIG. 3 is an example schematic diagram of a hardware structure of an electronic device;
FIG. 4 is an example schematic diagram of a software structure of an electronic device;
FIG. 5A is a first example schematic diagram of module interaction;
FIG. 5B is a first example schematic diagram of module interaction;
FIG. 5C is a first example schematic diagram of a service channel switching;
FIG. 5D is a first example schematic diagram of module interaction;
FIG. 5E is a first example schematic diagram of a service channel switching;
FIG. 6A is a first example schematic diagram of module interaction;
FIG. 6B is a first example schematic diagram of module interaction;
FIG. 6C is a first example schematic diagram of a service channel switching;
FIG. 6D is a first example schematic diagram of module interaction;
FIG. 6E is a first example schematic diagram of a service channel switching;
FIG. 7 is an example schematic diagram of a service channel when an electronic device simultaneously performs a STA service and a Wi-Fi P2P service;
FIG. 8 is a first example schematic diagram of module interaction; and
FIG. 9 is an example schematic flowchart of a channel selection method.

### DESCRIPTION OF EMBODIMENTS

The technical solutions in embodiments of this application are clearly and completely described below with reference to the accompanying drawings in embodiments of this application. Apparently, the described embodiments are some rather than all of embodiments of this application. All other embodiments obtained by a person of ordinary skill in the art based on embodiments of this application without making creative efforts shall fall within the protection scope of this application.

The term "and/or" in this specification is merely an association relationship of associated objects, and indicates that three relationships may exist. For example, A and/or B may indicate the following three cases: Only A exists, both A and B exist, and only B exists.

In the specification and claims in embodiments of this application, the terms "first", "second", and the like are intended to distinguish between different objects but do not indicate a particular sequence of the objects. For example, a first target object, a second target object, and the like are used to distinguish between different target objects, rather than describing a particular sequence of the target objects.

In embodiments of this application, the terms such as "example" or "for example" are used to represent giving an example, an illustration, or a description. Any embodiment or design scheme described as "example" or "for example" in embodiments of this application should not be explained as being more preferred or having more advantages than another embodiment or design scheme. Exactly, use of the terms such as "example" and "for example" is intended to present a related concept in a specific manner.

In the descriptions of embodiments of this application, unless otherwise stated, "a plurality of" means two or more. For example, a plurality of processing units mean two or more processing units, and a plurality of systems mean two or more systems.

Wi-Fi (wirelessfidelity, wireless fidelity) is a wireless communication technology, and is an implementation of a WLAN (Wireless Local Area Network, wireless local area network). Currently, a Wi-Fi technology is mainly implemented in high frequency bands such as 2.4 GHz and 5 GHz. In the Wi-Fi technology, an AP is a creator of a Wi-Fi wireless network, and is a central node of the Wi-Fi wireless network. It may be understood that a wireless router is an AP. In the Wi-Fi technology, a STA is an electronic device accessing the Wi-Fi wireless network. It may be understood that each electronic device (for example, a mobile phone, a tablet computer, or a PC (Personal Computer, personal computer)) accessing the wireless router may be referred to as a STA.

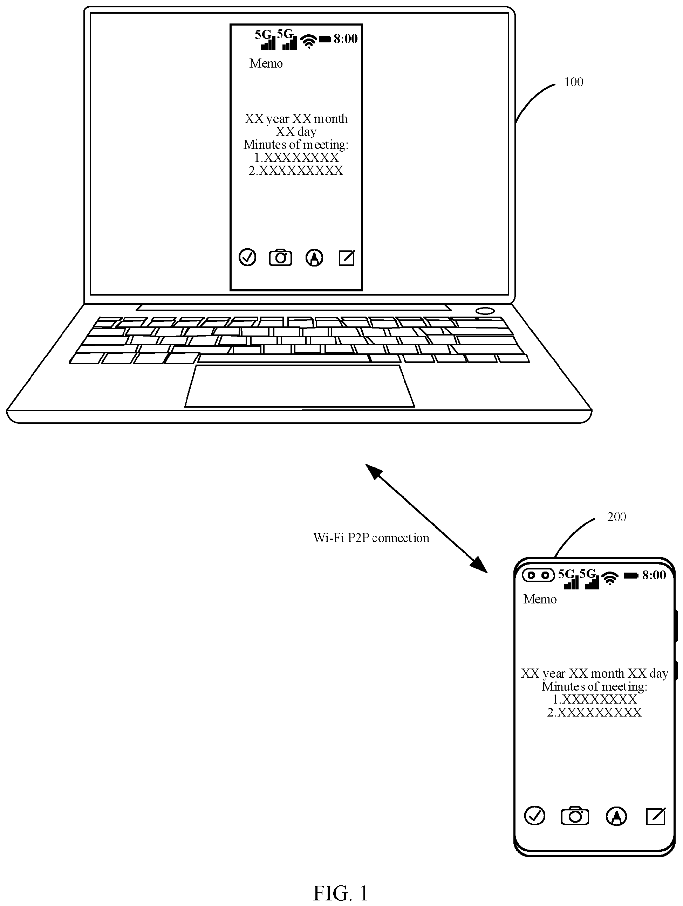

With continuous development of science and technologies, there are more and more interconnection applications, such as wireless screen projection, wireless mutual transmission, smart household, and data clustering between the electronic devices. These interconnection applications may implement device interconnection based on a Wi-Fi direct (Wi-Fi Direct) technology. The Wi-Fi Direct technology is a point-to-point connection technology based on the IEEE 802.11 Protocol, and the Wi-Fi Direct may also be referred to as a Wi-Fi P2P (Peer to Peer, peer-to-peer) connection. Electronic devices may share data with each other after establishing the Wi-Fi P2P connection with each other. A wireless screen projection scenario is used as an example. As shown in FIG. 1, after a PC 100 establishes a Wi-Fi P2P connection with a mobile phone 200, the mobile phone 200 may share a picture of the mobile phone 200 to the PC 100 end.

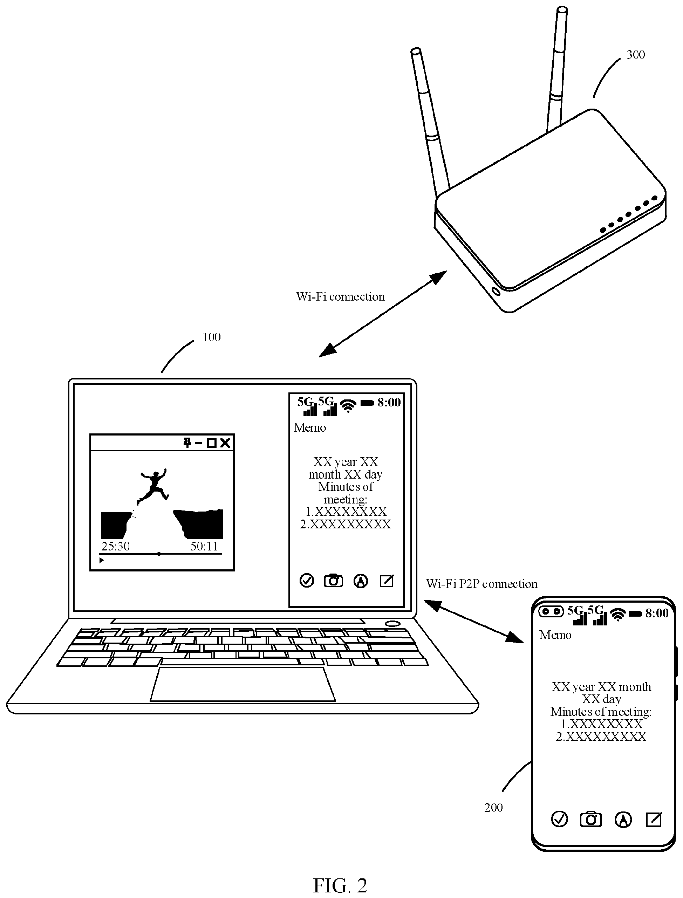

In a case in which an electronic device accesses a Wi-Fi wireless AP to become a STA, the electronic device may also establish a Wi-Fi P2P connection with another terminal device to perform a P2P service, for example, a wireless screen projection service or a wireless mutual transmission service. As shown in FIG. 2, when the PC 100 accesses a wireless router 300 to become a STA, the PC 100 may further establish a Wi-Fi P2P connection with the mobile phone 200 to perform a wireless screen projection service. In this case, a user not only can use the PC 100 to access a network (for example, watch a video), but also can project a picture of the mobile phone 200 to a PC 100 end, so as to view the picture of the mobile phone 200 on a display of the PC 100 at the same time.

Compared with a 2.4 GHz channel, data transmission efficiency of a 5 GHz channel is higher. Therefore, to improve concurrency efficiency of a STA service and the P2P service of the PC 100, the PC 100 may access the wireless router 300 through the 5 GHz channel, and also establish a Wi-Fi P2P connection with the mobile phone 200 through the 5 GHz channel. It may be understood that the 2.4 GHz channel mentioned in the specification refers to a channel in a 2.4 GHz frequency band, and the 5 GHz channel (5G channel for short) refers to a channel in a 5 GHz frequency band.

The 5 GHz frequency band refers to a radio frequency band (5150 MHz to 5825 MHz) that can be used for free, commonly referred to as a 5G Wi-Fi frequency band. There are 201 channels in this frequency band in total. However, there are a few channels that can be used based on a Wi-Fi protocol. The reason is that this frequency band is special, which coincides with a military radar frequency band. Therefore, in consideration of national security, many countries maintain a reservation attitude for the 5 GHz frequency band.

Because related departments of a country XX open more channels in the 5 GHz frequency band for Wi-Fi transmission, a communication committee XX approves permissions of Wi-Fi devices Unlicensed National Information Infrastructure (UNII-2) frequency bands (5.25 GHz to 5.35 GHz and 5.47 GHz to 5.725 GHz frequency bands). In addition, these frequency bands are also used for military devices and weather radars. Therefore, DFS (Dynamic Frequency Selection, dynamic frequency selection) becomes a necessary condition for using the 5 GHz frequency band by the Wi-Fi device.

The DFS is used for dynamically adjusting a communication channel between an AP and a terminal in the wireless local area network, and is a mechanism that can dynamically monitor a radar signal and avoid interference to a radar system. Some radar systems operate in frequency bands of 5.25 GHz to 5.35 GHz and 5.47 GHz to 5.725 GHz, and may interfere with an AP radio frequency signal operating in the 5G frequency band. When detecting that there is radar signal interference in a frequency band of an operating channel on which the AP is located, the AP automatically switches to another operating channel. It may be understood that the DFS channel mentioned in this specification refers to the 5 GHz channel shared by Wi-Fi and radar.

5 GHz channels opened in each country are different. Some countries have strong interference immunity and open more frequency bands. Some countries open a few or even no frequency bands. Different countries have different DFS channel division policies. Open policies for the 5 GHz channels are also different in different countries. Table 1 shows development situations of the 5 GHz channels in some countries. It can be learned from Table 1 that 5 GHz prohibited channels divided by different countries are different.

**Table 1**

| Channel number | Frequency (MHz) | America | Europe | Japan | Singapore | China |
|---|---|---|---|---|---|---|
| 36 | 5180 | Available | Available | Available | Available | Prohibited |
| 40 | 5200 | Available | Available | Available | Available | Prohibited |
| 44 | 5220 | Available | Available | Available | Available | Prohibited |
| 48 | 5240 | Available | Available | Available | Prohibited | Prohibited |
| 52 | 5260 | Available | Available | Available | Prohibited | Prohibited |
| 56 | 5280 | Available | Available | Available | Prohibited | Prohibited |
| 60 | 5300 | Available | Available | Available | Prohibited | Prohibited |
| 64 | 5320 | Available | Available | Available | Prohibited | Prohibited |
| 68-96 | 5340-5480 | Prohibited | Prohibited | Prohibited | Prohibited | Prohibited |
| 100 | 5500 | Available | Available | Available | Prohibited | Prohibited |
| 104 | 5520 | Available | Available | Available | Prohibited | Prohibited |
| 108 | 5540 | Available | Available | Available | Prohibited | Prohibited |
| 112 | 5560 | Available | Available | Available | Prohibited | Prohibited |
| 116 | 5580 | Available | Available | Available | Prohibited | Prohibited |
| ... | ... | ... | ... | ... | ... | ... |
| 165 | 5825 | Available | Prohibited | Prohibited | Available | Available |

Country code (Country Code) is referred to as country code for short, and is name code representing an existing country, an independent institution, or a special geographical political region. When selecting the 5 GHz channel, the electronic device needs to obtain country code, to obtain a 5 GHz channel use policy of the country based on the country code, to avoid violating regulations of the country.

It may be understood that, the DFS channel is not completely prohibited from being used by the electronic device. When using the DFS channel, the electronic device needs to limit transmit power. During use of the DFS channel, if detecting a corresponding radar signal, the electronic device needs to immediately stop using a current channel and seek an idle channel for access.

An embodiment of this application provides a channel selection method. In the method, when a STA service of an electronic device is implemented by using a DFS channel, a P2P service and/or a hotspot (HOTSPOT) service of the electronic device is also selected to be started on the DFS channel. This not only can satisfy national regulations, but also ensure higher concurrency efficiency of services of the electronic device because of a large bandwidth of the DFS channel.

It may be understood that the STA service of the electronic device refers to various network access services executed by the electronic device after the electronic device accesses a wireless AP to become a station.

The electronic device may be a mobile phone, a tablet computer, a PC (for example, a notebook computer or a desktop computer). A type of the electronic device is not limited in this embodiment.

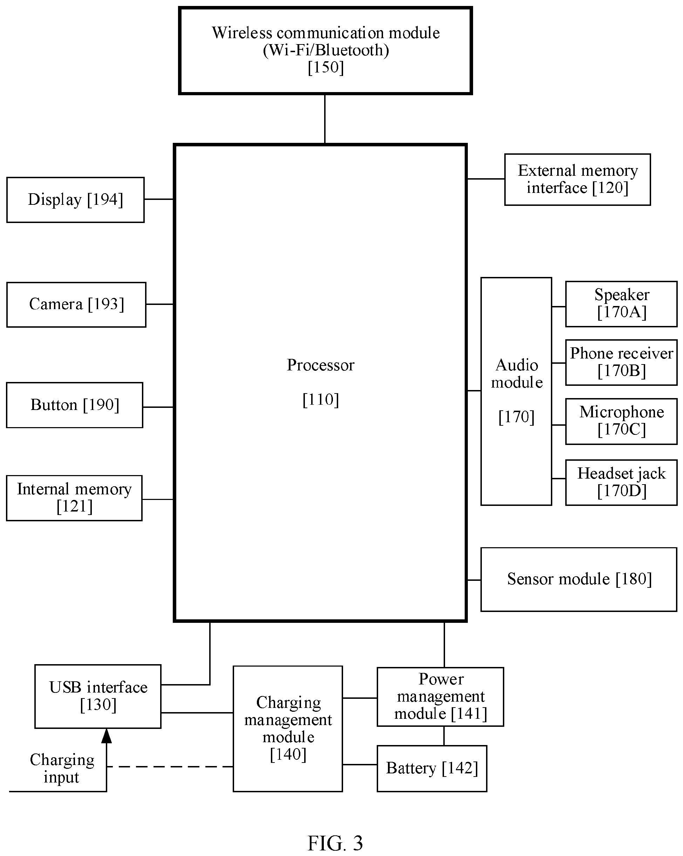

FIG. 3 is a schematic diagram of a structure of an electronic device. It should be understood that the electronic device shown in FIG. 3 is only an example of an electronic device, and the electronic device may have more or fewer components than those shown in the figure, may combine two or a plurality of components, or may have different component configurations. Various components shown in FIG. 3 may be implemented by hardware that includes one or more signal processing circuits and/or application-specific integrated circuits, software, or a combination of hardware and software.

The electronic device may include a processor 110, an external memory interface 120, an internal memory 121, a universal serial bus (universal serial bus, USB) interface 130, a charging management module 140, a power management module 141, a battery 142, a wireless communication module 150, an audio module 170, a speaker 170A, a phone receiver 170B, a microphone 170C, a headset jack 170D, a sensor module 180, a button 190, a camera 193, a display 194, and the like. The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The processor 110 may include one or more processing units. For example, the processor 110 may include an application processor (application processor, AP), a graphics processing unit (graphics processing unit, GPU), an image signal processor (image signal processor, ISP), a controller, a memory, a video codec, a digital signal processor (digital signal processor, DSP), a neural-network processing unit (neural-network processing unit, NPU), and/or the like. Different processing units may be separate components, or may be integrated into one or more processors.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a universal serial bus (universal serial bus, USB) interface, and/or the like.

It may be understood that an interface connection relationship between the modules illustrated in this embodiment of this application is merely an example for description, and does not constitute a limitation on the structure of the electronic device. In some other embodiments of this application, the electronic device may alternatively use an interface connection manner different from that in the foregoing embodiment, or use a combination of a plurality of interface connection manners.

The wireless communication module 150 may provide a solution for wireless communication to be applied to the electronic device, including a wireless local area network (wireless local area networks, WLAN) (such as a wireless fidelity (wireless fidelity, Wi-Fi) network), Bluetooth (bluetooth, BT), and the like. The wireless communication module 150 may be one or more components integrating at least one communication processing module. The wireless communication module 150 receives an electromagnetic wave via an antenna, performs frequency modulation and filtering on an electromagnetic wave signal, and sends a processed signal to the processor 110. The wireless communication module 150 may further receive a to-be-sent signal from the processor 110, perform frequency modulation and amplification on the to-be-sent signal, and convert an amplified signal into an electromagnetic wave for radiation through the antenna. For example, the wireless communication module 150 may be a communication chip having a Wi-Fi function and a Bluetooth function.

In some implementations, using a PC as an example, the PC may include a primary communication chip and a secondary communication chip. The primary communication chip includes a Bluetooth module and a Wi-Fi module, and the secondary communication chip also includes a Bluetooth module and a Wi-Fi module. The primary communication chip may be separately configured to carry a Wi-Fi P2P service, and the secondary communication chip may also be separately configured to carry a Wi-Fi P2P service.

It should be noted that the Bluetooth module included in the primary communication chip may be a Bluetooth chip (temporarily referred to as a primary Bluetooth chip), and the Wi-Fi module included in the primary communication chip may be a Wi-Fi chip (temporarily referred to as a primary Wi-Fi chip). Specifically, the primary Bluetooth chip and the primary Wi-Fi chip may be integrated into a same chip, and the integrated chip is the primary communication chip. Certainly, the primary Bluetooth chip and the primary Wi-Fi chip may not be integrated into a same chip, and a combination of the primary Bluetooth chip and the primary Wi-Fi chip is referred to as the primary communication chip. Similarly, the Bluetooth module included in the secondary communication chip may be a Bluetooth chip (temporarily referred to as a secondary Bluetooth chip), and the Wi-Fi module included in the secondary communication chip may be a Wi-Fi chip (temporarily referred to as a secondary Wi-Fi chip). Specifically, the secondary Bluetooth chip and the secondary Wi-Fi chip may be integrated into a same chip, and the integrated chip is the secondary communication chip. Certainly, the secondary Bluetooth chip and the secondary Wi-Fi chip may not be integrated into a same chip, and a combination of the secondary Bluetooth chip and the secondary Wi-Fi chip is referred to as the secondary communication chip.

The primary communication chip may be understood as an existing communication chip of the electronic device, and the secondary communication chip may be understood as a small communication chip newly added based on the existing communication chip. In other words, in addition to the existing primary communication chip, the secondary communication chip (or referred to as the small communication chip) is further added to the PC. The primary communication chip has a Wi-Fi communication capability and a Bluetooth communication capability, and the secondary communication chip also has a Wi-Fi communication capability and a Bluetooth communication capability.

The electronic device implements a display function by using the GPU, the display 194, the application processor, and the like. The display 194 is configured to display an image, a video, or the like. The display 194 includes a display panel. The electronic device may implement a photographing function by using the ISP, a camera 193, the video codec, the GPU, the display 194, the application processor, and the like. The ISP is configured to process data fed back by the camera 193. In some embodiments, the ISP may be disposed in the camera 193. The camera 193 is configured to capture a static image or a video.

The electronic device may use the audio module 170, the speaker 170A, the phone receiver 170B, the microphone 170C, the headset jack 170D, the application processor, and the like, to implement an audio function, for example, implement a music playback function or a recording function. The audio module 170 is configured to convert digital audio information into an analog audio signal for output, and is further configured to convert analog audio input into a digital audio signal. The audio module 170 may be further configured to encode and decode an audio signal.

In some implementations, the processor 110 may further include a modem processor. The modem processor may include a modulator and a demodulator. The modulator is configured to modulate a low frequency baseband signal to be sent into a medium and high frequency signal. The demodulator is configured to demodulate the received electromagnetic wave signal into a low-frequency baseband signal. The electronic device may further include a mobile communication module, a SIM (Subscriber Identity Module, subscriber identity module) card interface, and the like. The mobile communication module may provide a solution for wireless communication, including 2G/3G/4G/5G and the like, that is applied to the electronic device.

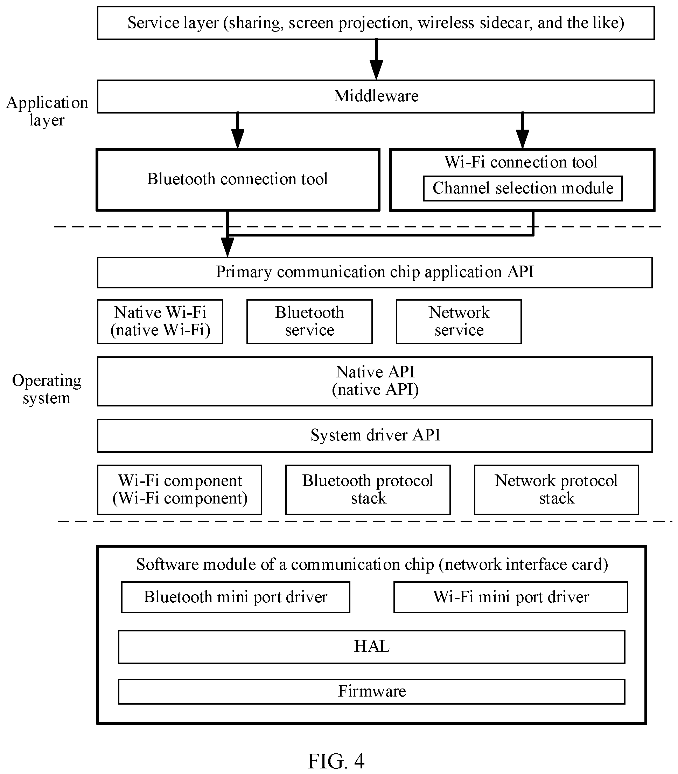

FIG. 4 is an example schematic diagram of a software structure of an electronic device. As shown in FIG. 4, in a layered architecture of the electronic device, software is divided into several layers, and each layer has a clear role and responsibility. The layers communicate with each other through software interfaces. In some embodiments, the software structure of the electronic device may be divided into an application layer and an operating system (Operating System, OS). In addition, the software structure of the electronic device further includes a software module of a communication chip (or referred to as a network interface card of the electronic device).

As shown in FIG. 4, the application layer may include a service layer, middleware, a Bluetooth connection tool, and a Wi-Fi connection tool. For example, the service layer may include a series of application packages, for example, applications such as wireless sharing, wireless screen projection, and wireless sidecar. For example, when Wi-Fi P2P connections are established between the electronic device and another terminal, the application packages may transmit data to the another terminal based on the Wi-Fi P2P connections.

The middleware (or referred to as interconnecting middleware) is independent system software or a service program. Distributed application software may share resources between different technologies by using the software. The middleware is located in an operating system operating a client/server, and manages computer resources and network communication. The middleware is software connecting two independent applications or independent systems. Connected systems, even if the systems have different interfaces, can still exchange information with each other by using the middleware. A key way of executing the middleware is information transfer. The application may work on a multi-platform or an OS environment by using the middleware.

The Bluetooth connection tool is configured to implement functions related to a Bluetooth connection, such as Bluetooth scanning, Bluetooth turned-off/turned-on/status monitoring/Bluetooth name reading/MAC address reading, Bluetooth broadcast sending, Bluetooth broadcast packet, broadcasting start/stop, and Bluetooth broadcast packet processing. The Bluetooth connection tool may further be configured to generate an instruction corresponding to the Bluetooth chip, and send the instruction to the communication chip by using a communication chip application API (Application Program Interface, application program interface).

For example, an application on the service layer may query a Bluetooth status by using the middleware and the Bluetooth connection tool, and control the Bluetooth chip to perform Bluetooth scanning, Bluetooth broadcasting, and the like.

The Wi-Fi connection tool is configured to implement functions related to the Wi-Fi connection, and includes, but is not limited to, management of a STA, management of an SAP (Soft Access Point, soft access point), management of a P2P, and selection of a channel related to the Wi-Fi connection.

The management of the SAP (or referred to as a Soft-AP) may be used for implementing management of the SAP in the Wi-Fi chip, for example, creating the SAP or deleting the SAP.

The management of the STA is used for implementing management related to access of the Wi-Fi chip to the wireless AP.

The management of P2P is used for implementing management related to a Wi-Fi P2P connection.

For example, a channel selection module in the Wi-Fi connection tool is configured to implement channel selection, channel switching, or the like related to the Wi-Fi connection. In this embodiment of this application, when the STA service is implemented on the DFS channel, the channel selection module may select the DFS channel to carry the Wi-Fi P2P service and/or the HOTSPOT service. The channel selection module may further switch, when the STA service is switched from the DFS channel to another channel, a bearer channel of the Wi-Fi P2P service and/or the HOTSPOT service to a same channel. The channel selection module may further switch the bearer channel of the Wi-Fi P2P service and/or the HOTSPOT service from the DFS channel to another non-DFS channel when communication of the STA service is disconnected. In addition, when the STA service is not implemented on the DFS channel, the channel selection module may select a standard 5G Hz channel as the bearer channel of the Wi-Fi P2P service based on country code information.

The Wi-Fi connection tool may further be configured to generate an instruction corresponding to the Wi-Fi chip, and send the instruction to the communication chip by using the communication chip application API, so as to implement a corresponding Wi-Fi communication function. For example, the application on the service layer may indicate, by using the middleware and the Wi-Fi connection tool, the communication chip to establish a Wi-Fi P2P connection, monitor a Wi-Fi link status, and the like.

An OS is a large program system, and is responsible for allocation and scheduling of all software and hardware resources of a computer, controlling and coordinating activities of a plurality of tasks, and implementing information access and protection. The operating system provides a user interface, so that a user obtains a good working environment.

For example, as shown in FIG. 4, the OS may include a communication chip application API, a native Wi-Fi functional module, a Bluetooth service module, a network service module, a native API, a system driver API, a Wi-Fi component, a Bluetooth protocol stack, and a network (network) protocol stack. The communication chip application API may be configured to perform managing, controlling, and the like on the communication chip.

It may be understood that, the native Wi-Fi functional module is configured to provide a service related to a Wi-Fi function, the Bluetooth service module is configured to provide a service related to a Bluetooth function, and the network service module is configured to provide a service related to a network. The native API may be configured to perform managing, controlling, and the like on a local-related function. The system driver API may be configured to perform managing, controlling, and the like on a system driver-related function.

Still with reference to FIG. 4, the software module of the communication chip is a functional module corresponding to the communication chip, including a Bluetooth mini port (mini port) driver, a Wi-Fi mini port (mini port) driver, a HAL (Hardware Abstraction Layer, hardware abstraction layer) corresponding to the primary communication chip, and firmware corresponding to the primary communication chip.

The HAL is an interface layer between an operating system kernel and a hardware circuit, to abstract hardware. The HAL hides hardware interface details of a specific platform, and provides a virtual hardware platform for the operating system.

The firmware (firmware) is generally stored in an EEPROM (Electrically Erasable Programmable ROM, electrically erasable programmable ROM) or a FLASH chip, and is a program that can be upgraded by the user by using a specific refresh program. The firmware is underlying code connecting hardware and an operating system when a computer is started. The operating system can implement a running action of a specific machine based on a standard device driver by using the firmware.

It may be understood that the layers in the software structure shown in FIG. 4 and components included in the layers do not constitute a specific limitation on the electronic device. In some other embodiments of this application, the electronic device may include more or fewer layers than those shown in the figure, and each layer may include more or fewer components. This is not limited in this application.

It may be understood that to implement the channel selection method in embodiments of this application, the electronic device includes corresponding hardware and/or software modules for performing the functions. Algorithm steps in examples described in embodiments disclosed in this specification can be implemented by hardware or a combination of hardware and computer software in this application. Whether a function is performed by hardware or computer software driving hardware depends on particular applications and design constraint conditions of the technical solutions. A person skilled in the art may use different methods to implement the described functions with reference to embodiments for each particular application, but such implementation should not be considered to go outside the scope of this application.

The following explains and describes the channel selection method provided in embodiments of this application by using an example in which the electronic device is a PC.

### Scenario 1

In this scenario, before the PC starts a Wi-Fi P2P service, the PC has a STA service, and a bearer channel of the STA service is a DFS channel. In this case, the PC may use the DFS channel carrying the STA service as a channel carrying the Wi-Fi P2P service. When the bearer channel of the STA service is changed, the bearer channel of the Wi-Fi P2P service is changed accordingly. When the STA service is interrupted, the PC reselects another standard 5G channel for the Wi-Fi P2P service.

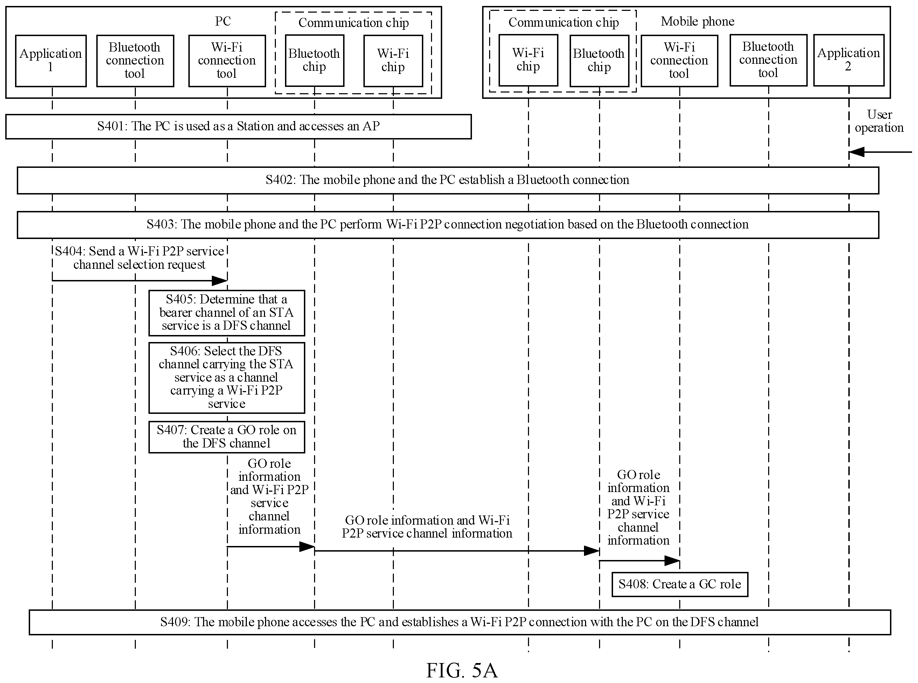

FIG. 5A is an example flowchart of module interaction. As shown in FIG. 5A, a procedure of the channel selection method provided in this embodiment of this application includes the following steps.

S401: The PC is used as a Station and accesses an AP.

After the PC accesses the AP by using a communication chip (which may be specifically referred to as a Wi-Fi chip) of the PC, the PC is a Station of the AP. In this way, the communication chip of the PC is operated in a Wi-Fi Station mode, and may execute the STA service, so that a user may perform a network access operation by using the PC.

S402: In response to a user operation, a mobile phone and the PC establish a Bluetooth connection.

The user operation is an operation used for triggering establishment of a Wi-Fi P2P connection between the mobile phone and the PC to implement the Wi-Fi P2P service. A common scenario in which the Wi-Fi P2P connection is established between the mobile phone and the PC includes wireless screen projection, wireless mutual transmission, and the like. The wireless screen projection scenario is used as an example for description in this embodiment.

It may be understood that an initial link in which the mobile phone and the PC establish the Wi-Fi P2P connection is device scanning and discovery. The mobile phone and the PC may complete device discovery by sending a request frame at one end (for example, the mobile phone), and returning a response frame after the other end (for example, the PC receives the request frame). In this way, the PC may be displayed in an available device list of screen projection of the mobile phone. In some embodiments, the request frame and the response frame may carry indication information, indicating that the Wi-Fi P2P connection needs to be established to complete wireless screen projection, and the like.

In this embodiment of this application, before the mobile phone and the PC establish the Wi-Fi P2P connection, a device scanning and discovery process is implemented based on a Bluetooth function. Then, a Bluetooth pairing and link establishment procedure is performed between the mobile phone and the PC, so that device information exchange may be performed between the mobile phone and the PC based on the Bluetooth connection, to prepare for establishing the Wi-Fi P2P connection between the mobile phone and the PC.

In an optional implementation, an operation of the user in a mobile phone screen projection application may be, for example, an operation that the user scans two-dimensional code by using a code scanning function in the mobile phone screen projection application. When the user wants to project a display picture of the mobile phone to the PC for displaying, the user may start a screen projection application on a mobile phone end, and enable a code scanning function of the screen projection application. A scanning operation is performed on related two-dimensional code of the PC based on the code scanning function, so that the mobile phone end can discover the PC, and perform a Bluetooth pairing and link establishment process with the PC. In this way, the PC may be used as a device on which the mobile phone can perform screen projection, and then the Wi-Fi P2P connection may be established between the mobile phone and the PC.

In another optional implementation, an operation of the user in a mobile phone screen projection application may be, for example, an operation of starting the screen projection application by the user, or an operation of holding the mobile phone close to the PC after starting the screen projection application by the user. When the user wants to project a display picture of the mobile phone to the PC for displaying, the user may start a screen projection application at a mobile phone end. The screen projection application automatically performs a scanning operation on surrounding devices based on a Bluetooth function of the mobile phone, to find a device on which the mobile phone can perform screen projection.

For example, if a Bluetooth connection is once established between the mobile phone and one of the devices (such as the PC), when the mobile phone automatically scans and finds the device based on the Bluetooth function, the mobile phone automatically performs Bluetooth pairing and establishes a link with the device. Optionally, after the mobile phone scans and finds the PC, and automatically performs Bluetooth pairing and establishes a link with the PC, if the user needs to project a display picture of the mobile phone to another device, the user may also perform a related operation to disconnect the Bluetooth connection (or the Wi-Fi P2P connection) between the mobile phone and the PC, so that the mobile phone re-establishes a Bluetooth connection with another device. This is not limited in this embodiment.

For another example, if the mobile phone has not established a Bluetooth connection to any surrounding device, the mobile phone displays a Bluetooth device discovery list when the mobile phone automatically scans a device based on the Bluetooth function. Further, the user may select the PC from the Bluetooth device discovery list, so that a Bluetooth pairing and link establishment procedure is performed between the mobile phone and the PC, thereby completing establishment of the Bluetooth connection between the mobile phone and the PC.

It should be noted that in this embodiment of this application, a Bluetooth function of the PC is set to a turned-on state, so that the mobile phone can establish the Bluetooth connection with the PC, and then device information exchange is performed based on the Bluetooth connection, to complete a procedure of establishing the Wi-Fi P2P connection between the mobile phone and the PC.

It should be noted that the foregoing operations of triggering establishment of the Bluetooth connection between the mobile phone and the PC are all example descriptions, which are not limited in this embodiment. In this embodiment of this application, establishing the Bluetooth connection between the mobile phone and the PC is to prepare for establishing the Wi-Fi P2P connection between the mobile phone and the PC. For example, the mobile phone and the PC may exchange information related to the Wi-Fi P2P connection and the like based on the Bluetooth connection between the mobile phone and the PC. In addition, compared with discovering a peer device based on Wi-Fi scanning between the mobile phone and the PC, discovering the peer device based on Bluetooth scanning between the mobile phone and the PC consumes shorter time and has faster efficiency, so that overall time consumption can be optimized when the Wi-Fi P2P connection is established between the mobile phone and the PC.

Implementation of the Bluetooth scanning and device discovery procedure, the Bluetooth device pairing and Bluetooth link establishment procedure mentioned above needs to be supported by operations of Bluetooth connection tools and Bluetooth chips in the PC and the mobile phone. For details, refer to the existing technology. Details are not described in this embodiment.

S403: The mobile phone and the PC perform Wi-Fi P2P connection negotiation based on the Bluetooth connection.

After the Bluetooth connection is established between the mobile phone and the PC, the mobile phone and the PC may perform related information negotiation based on the Bluetooth connection, to establish the Wi-Fi P2P connection between the mobile phone and the PC. The mobile phone may send a Wi-Fi P2P connection negotiation request to the PC, and the PC feeds back a Wi-Fi P2P connection negotiation response to the mobile phone. For example, information carried in the Wi-Fi P2P connection negotiation request may include, but is not limited to, a device name, a device type, a Wi-Fi P2P service type, and the like. This is not limited in this embodiment. The Wi-Fi P2P service type may be used for determining a channel bandwidth matching the Wi-Fi P2P service.

Optionally, the mobile phone and the PC perform GO (Group Owner, group owner) negotiation based on the Bluetooth connection. After the Bluetooth connection is established between the mobile phone and the PC, the mobile phone and the PC may perform GO negotiation based on the Bluetooth connection, to determine which device is a GO node, which device is a GC (Group Client, group client) node, and characteristic information of a P2P group through negotiation.

The GO negotiation may finally determine which device is the GO node, which device is the GC node, and the characteristic information of the P2P group through three frame interactions. The three frame interactions include a GO Negotiation Request (GO negotiation request), a GO Negotiation Response (GO negotiation response), and a GO Negotiation Confirmation (GO negotiation confirmation). In this embodiment of this application, the mobile phone and the PC perform the three frame interactions based on a direct Bluetooth connection between the mobile phone and the PC.

The GO negotiation request and the GO negotiation response include GO Intent (intent) that is an integer value ranging from 0 to 15, and which device is a GO node is determined based on values of the two values. If GO Intent of two devices is not equal, a device whose value of GO Intent is large serves as a GO node; If GO Intent of the two devices is equal to and less than 15, which device is a GO node may be determined based on a random number (Tie Breaker) in the GO negotiation request. If Tie Breaker is 1, the local device serves as the GO node; otherwise, the peer device serves as the GO node. If GO Intent of the two devices is equal and equal to 15, the GO negotiation fails.

In this embodiment of this application, a result of the GO negotiation completed by the mobile phone and the PC based on the Bluetooth connection is that the PC is a GO node. For details that are not explained in detail about GO negotiation, refer to the existing technology. Details are not described herein.

S404: An application 1 of the PC sends a Wi-Fi P2P service channel selection request to a Wi-Fi connection tool.

Before establishing the Wi-Fi P2P connection with the PC, the mobile phone further needs to select a channel corresponding to the Wi-Fi P2P service, that is, needs to select a channel corresponding to the Wi-Fi P2P connection. After determining the channel corresponding to the Wi-Fi P2P service, the mobile phone can control the communication chip to establish the Wi-Fi P2P connection with the mobile phone end based on the channel.

For example, the Wi-Fi P2P service channel selection request may include, but is not limited to, a Wi-Fi P2P service type.

S405: The Wi-Fi connection tool of the PC determines that a bearer channel of the STA service is a DFS channel.

When selecting the channel corresponding to the Wi-Fi P2P service, the Wi-Fi connection tool of the PC first determines whether the PC executes a STA service, that is, determines whether the PC accesses a wireless router. In this scenario, the PC has accessed the wireless router to perform the STA service. When finding that the communication chip of the PC executes the STA service, the Wi-Fi connection tool continues to determine whether the communication chip of the PC uses the DFS channel to carry the STA service. In this scenario, an example in which the communication chip of the PC carries the STA service by using the DFS channel is used for description.

S406: The Wi-Fi connection tool of the PC selects the DFS channel carrying the STA service as a channel carrying the Wi-Fi P2P service.

Because a current bearer channel of the STA service of the PC is the DFS channel, it indicates that no radar signal exists in the DFS channel, and the DFS channel may be used for the Wi-Fi P2P service. Therefore, a channel selection module in the Wi-Fi connection tool may use the DFS channel as a channel carrying the Wi-Fi P2P service.

In this way, the STA service and the Wi-Fi P2P service may use the DFS channel at the same time, so that higher concurrency efficiency of the STA service and the Wi-Fi P2P service can be ensured. In addition, it is legal and standard for the Wi-Fi P2P service to currently use the DFS channel.

S407: The Wi-Fi connection tool of the PC creates a GO role on the DFS channel, and sends GO role information and Wi-Fi P2P service channel information to the mobile phone end.

The GO role information may include, be not limited to, a device identifier, a MAC address, and the like. The Wi-Fi P2P service channel information includes, but is not limited to, a channel number, a channel frequency band, a channel bandwidth, and the like. Optionally, the Wi-Fi P2P service channel information may be included in the GO role information. This is not limited in this embodiment.

In this procedure, the PC is used as the GO node, and sends link establishment information to the mobile phone end. The link establishment information may include, but is not limited to, channel information, a password (Password), a SSID (Service Set Identifier, service set identifier), a MAC address of the GO node, and other information.

S408: The Wi-Fi connection tool of the mobile phone creates a GC role.

S409: The mobile phone accesses the PC and establishes the Wi-Fi P2P connection with the PC on the DFS channel.

After the GO negotiation between the PC and the mobile phone is completed, and a PC end selects the DFS channel corresponding to the Wi-Fi P2P connection and creates a GO on the DFS channel, the PC serving as the GO node may exchange link establishment information with the mobile phone serving as the GC node, to complete an operation of access of the GC to the GO. In this way, the PC establishes the Wi-Fi P2P connection with the mobile phone, so that a corresponding Wi-Fi P2P service can be completed between the PC and the mobile phone.

For details that are not explained in detail about the procedure of the access of the GC to the GO and establishment of the Wi-Fi P2P connection, refer to the existing technology. Details are not described herein.

A wireless screen projection service is used as an example. After a Wi-Fi P2P connection between the mobile phone and a secondary communication chip of the PC is established, the PC may perform data transmission related to the wireless screen projection service with the mobile phone based on the Wi-Fi P2P connection between the secondary communication chip and the mobile phone, so that the mobile phone can automatically project an interface of a screen of the mobile phone to an interface of the PC, or project content selected by a user to the interface of the PC. In this case, both the STA service and the Wi-Fi P2P service of the PC are implemented on a same DFS channel.

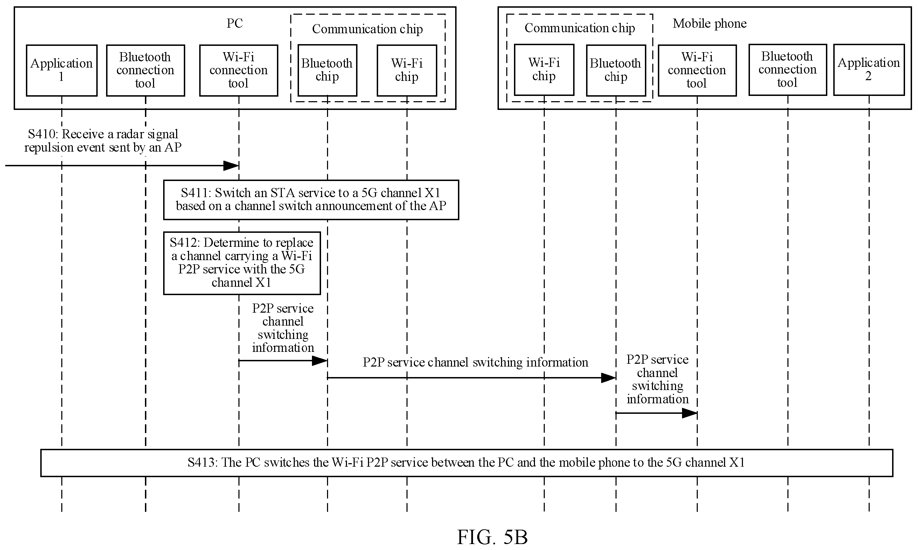

Based on the procedure shown in FIG. 5A, still with reference to FIG. 5B, after the Wi-Fi P2P service between the PC and the mobile phone is started on the DFS channel, the procedure of the channel selection method provided in this embodiment of this application may further include the following steps.

S410: The Wi-Fi connection tool of the PC receives a radar signal repulsion event sent by the AP.

The AP periodically detects whether radar signal interference occurs in a frequency band of an operating channel on which the AP is located. When the AP detects that there is radar signal interference in the frequency band of the operating channel on which the AP is located, the AP sends the radar signal repulsion event (or referred to as radar signal pushback information) to a terminal device accessing the AP. The radar signal repulsion event indicates that there is radar signal interference on a current operating channel, and the operating channel needs to be switched.

S411: The Wi-Fi connection tool of the PC switches the STA service to a 5G channel X1 based on a channel switch announcement sent by the AP.

When the AP detects that there is radar signal interference in the frequency band of the operating channel on which the AP is located, the AP sends a CSA (Channel Switch Announcement, channel switch announcement) to the terminal device accessing the AP, so that the terminal device switches the STA service from a channel to another channel (for example, the 5G channel X1) based on the CSA. The AP may unicast the CSA, or may broadcast the CSA. The CSA may be included in an action frame, present in a beacon (beacon) frame in the form of an IE (Information Element, information element), or included in a probe response (Probe Response) frame.

An element related to the CSA may include a New Channel Number and a Channel Switch count. The New channel Number indicates a channel (channel) which is switched to, and the Channel Switch count indicates how long the channel is switched.

After the PC receives the CSA sent by the AP, the PC switches the STA service of the PC to an operating channel indicated by the CSA. In this embodiment, a channel identified by the New Channel Number is a non-DFS channel. An example in which the channel identified by the New Channel Number is the 5G channel X1 is used below for description.

For details that are not explained in detail about STA service channel switching, refer to the existing technology. Details are not described herein.

S412: After the STA service is switched to the 5G channel X1, the Wi-Fi connection tool of the PC determines to replace the channel carrying the Wi-Fi P2P service with the 5G channel X1, and sends P2P service channel switching information to the mobile phone end.

In this embodiment of this application, when a channel of the STA service of the PC is switched, the channel selection module in the Wi-Fi connection tool determines to switch the channel carrying the Wi-Fi P2P service accordingly. To be specific, when the STA service of the PC is switched to the 5G channel X1 (the non-DFS channel), the channel selection module determines to also replace the channel of the Wi-Fi P2P service with the 5G channel X1, so that the STA service and the Wi-Fi P2P service of the PC continue to be implemented on a same frequency and channel.

For example, the P2P service channel switching information may include information about a channel which is switched to (for example, a channel number), channel switching time, and the like. The P2P service channel switching information may alternatively be sent based on the Bluetooth connection between the mobile phone and the PC, or may be sent based on the Wi-Fi connection between the mobile phone and the PC. This is not limited in this embodiment.

S413: The PC switches the Wi-Fi P2P service between the PC and the mobile phone to the 5G channel X1.

After the PC sends the P2P service channel switching information to the mobile phone end, the PC and the mobile phone re-establish a Wi-Fi P2P connection based on the information about a channel which is switched to, to switch the bearer channel of the Wi-Fi P2P service. For details that are not explained in detail about a switching procedure of the channel of the Wi-Fi P2P service, refer to the existing technology. Details are not described herein.

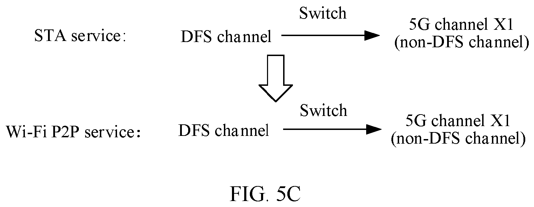

In this embodiment of this application, as shown in FIG. 5C, because the AP detects that there is radar signal interference on the channel (that is, the DFS channel) of the STA service of the PC, when the STA service of the PC is switched from the DFS channel to a non-DFS channel (for example, the 5G channel X1), the Wi-Fi P2P service between the PC and the mobile phone is also switched from the DFS channel to a corresponding non-DFS channel (for example, the 5G channel X1).

In this way, the operating channel of the Wi-Fi P2P service between the PC and the mobile phone is changed as the operating channel of the STA service is switched, and the STA service and the Wi-Fi P2P service are implemented on a same frequency communication channel, so that higher concurrency efficiency of the STA service and the Wi-Fi P2P service is ensured. In addition, an operating channel selected by the PC for the Wi-Fi P2P service is legal and standard.

If the operating channel of the STA service of the PC is switched back to the DFS channel again, the operating channel of the Wi-Fi P2P service between the PC and the mobile phone may also be switched back to the DFS channel again along with the STA service of the PC.

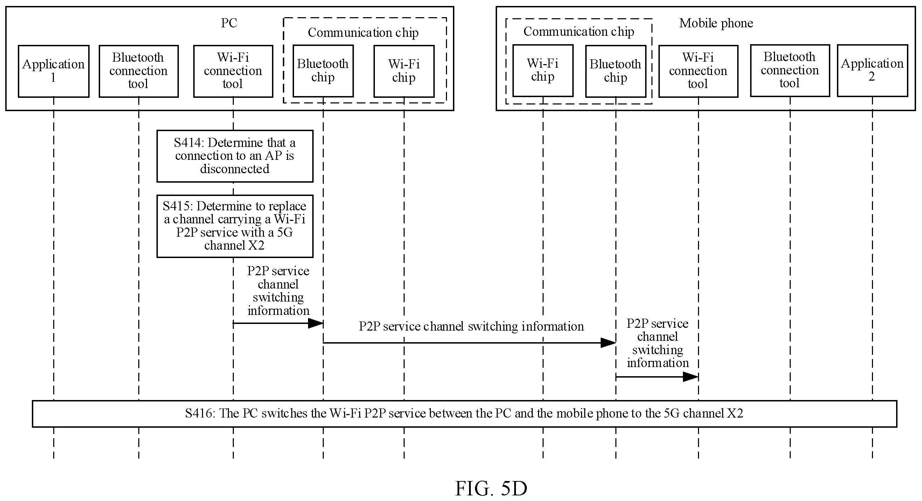

Based on the procedure shown in FIG. 5A, still with reference to FIG. 5D, after the Wi-Fi P2P service between the PC and the mobile phone is started on the DFS channel, the procedure of the channel selection method provided in this embodiment of this application may further include the following steps.

S414: The Wi-Fi connection tool of the PC determines that a connection between the PC and the AP is disconnected.

For example, the Wi-Fi connection tool of the PC receives a STA disconnection event, and determines that the connection between the PC and the AP is disconnected, that is, the STA service of the PC is interrupted.

S415: The Wi-Fi connection tool of the PC determines to replace the channel carrying the Wi-Fi P2P service with a 5G channel X2, and sends P2P service channel switching information to the mobile phone end.

When the AP detects that there is radar signal interference on the DFS channel, because the STA service of the PC is interrupted, the PC cannot receive a radar signal repulsion event sent by the AP, and the PC cannot learn in time whether there is radar signal interference on a current operating channel (that is, the DFS channel) of the Wi-Fi P2P service, and whether a channel switching operation needs to be performed. Therefore, after it is determined that the connection between the PC and the AP is disconnected, the Wi-Fi connection tool of the PC needs to reselect an operating channel for the Wi-Fi P2P service, to avoid impact on a radar system because a channel is not switched for the Wi-Fi P2P service in time.

The channel selection module in the Wi-Fi connection tool may reselect a non-DFS channel for the Wi-Fi P2P service according to a preset channel selection strategy, generate P2P service channel switching information based on the reselected non-DFS channel (for example, the 5G channel X2), and send the P2P service channel switching information to the mobile phone end.

For example, the P2P service channel switching information may include information about a channel which is switched to (for example, a channel number), channel switching time, and the like. The P2P service channel switching information may alternatively be sent based on the Bluetooth connection between the mobile phone and the PC, or may be sent based on the Wi-Fi connection between the mobile phone and the PC. This is not limited in this embodiment.

S416: The PC switches the Wi-Fi P2P service between the PC and the mobile phone to the 5G channel X2.

After the PC sends the P2P service channel switching information to the mobile phone end, the PC and the mobile phone re-establish a Wi-Fi P2P connection based on the information about a channel which is switched to, to switch the channel of the Wi-Fi P2P service. For details that are not explained in detail about a switching procedure of the channel of the Wi-Fi P2P service, refer to the existing technology. Details are not described herein.

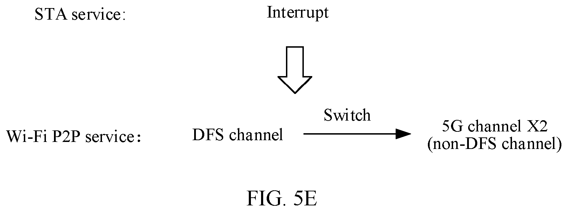

In this embodiment of this application, as shown in FIG. 5E, when the STA service of the PC is interrupted, the Wi-Fi P2P service between the PC and the mobile phone is switched from the DFS channel to the non-DFS channel, so that legal conformity of the channel of the Wi-Fi P2P service is ensured.

If the STA service of the PC is restored, that is, a link is re-established for the STA service, and an operating channel of the STA service is the DFS channel, the operating channel of the Wi-Fi P2P service between the PC and the mobile phone may also be switched back to the DFS channel with the STA service of the PC again. Certainly, if the STA service of the PC is restored, that is, a link is re-established for the STA service, and the operating channel of the STA service is a non-DFS channel, the operating channel of the Wi-Fi P2P service between the PC and the mobile phone may also be switched again with the STA service of the PC, so that the Wi-Fi P2P service and the STA service are implemented based on a same frequency communication channel.

### Scenario 2

In this scenario, before the PC starts a Wi-Fi P2P service, the PC has a STA service, and a bearer channel of the STA service is a DFS channel. In this case, the PC may use the DFS channel carrying the STA service as a channel carrying a Wi-Fi HOTSPOT (hotspot) service. When the bearer channel of the STA service is changed, a bearer channel of the Wi-Fi HOTSPOT service is changed accordingly. When the STA service is interrupted, the PC re-selects a standard 5G channel for the Wi-Fi HOTSPOT service.

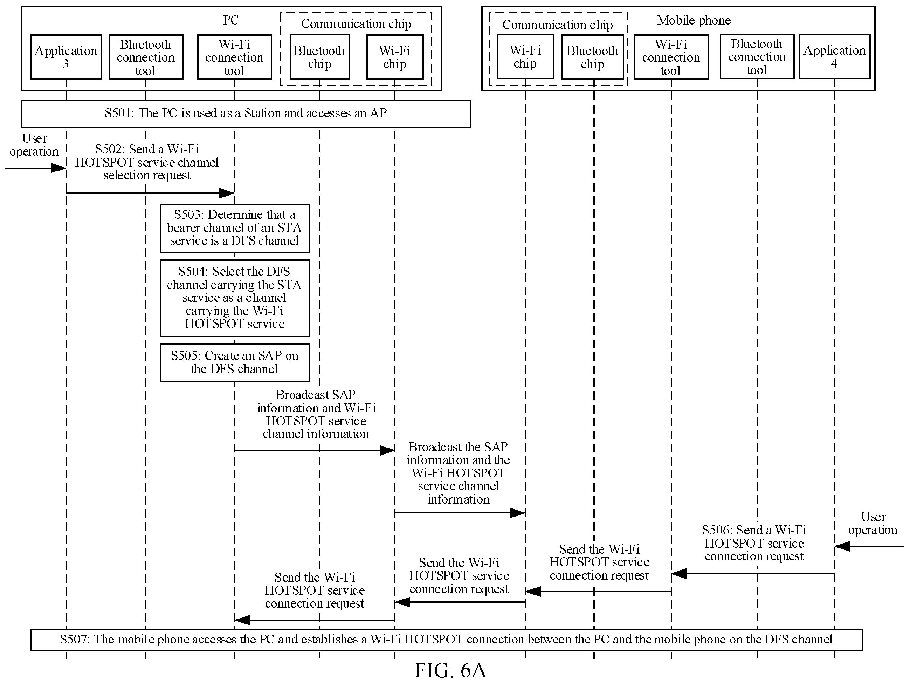

FIG. 6A is an example flowchart of module interaction. As shown in FIG. 6A, a procedure of the channel selection method provided in this embodiment of this application includes the following steps.

S501: The PC is used as a Station and accesses an AP.

After the PC accesses the AP by using a communication chip (which may be specifically referred to as a Wi-Fi chip) of the PC, the PC is a Station of the AP. In this way, the communication chip of the PC is operated in a Wi-Fi Station mode, and may execute the STA service, so that a user may perform a network access operation by using the PC.

S502: In response to a user operation, an application 3 of the PC sends a Wi-Fi HOTSPOT service channel selection request to a Wi-Fi connection tool.

For example, the application 3 may be a setting application, and the user operation may be an operation that a user starts a PC hotspot function in the setting application.

S503: The Wi-Fi connection tool of the PC determines that the bearer channel of the STA service is a DFS channel.

After receiving the Wi-Fi HOTSPOT service channel selection request, the Wi-Fi connection tool of the PC selects an operating channel for a Wi-Fi HOTSPOT service of the PC based on the Wi-Fi HOTSPOT service channel selection request. The Wi-Fi connection tool of the PC first determines whether the PC executes the STA service, that is, determines whether the PC accesses a wireless router.

In this scenario, the PC has accessed the wireless router to perform the STA service. When finding that the communication chip of the PC executes the STA service, the Wi-Fi connection tool continues to determine whether the communication chip of the PC uses the DFS channel to carry the STA service. In this scenario, an example in which the communication chip of the PC carries the STA service by using the DFS channel is used for description.

S504: The Wi-Fi connection tool of the PC selects the DFS channel carrying the STA service as a channel carrying the Wi-Fi HOTSPOT service.

Because a current bearer channel of the STA service of the PC is the DFS channel, it indicates that no radar signal exists in the DFS channel, and the DFS channel may be used for the Wi-Fi HOTSPOT service. Therefore, a channel selection module in the Wi-Fi connection tool may use the DFS channel as a channel carrying the Wi-Fi HOTSPOT service.

In this way, the STA service and the Wi-Fi HOTSPOT service may use the DFS channel at the same time, so that higher concurrency efficiency of the STA service and the Wi-Fi HOTSPOT service can be ensured. In addition, it is legal and standard for the Wi-Fi HOTSPOT service to currently use the DFS channel.

S505: The Wi-Fi connection tool of the PC creates an SAP (Soft Access Point, soft access point) on the DFS channel and broadcast SAP information and HOTSPOT service channel information.

The SAP, that is, a Soft-AP, is a wireless network created by using a Wi-Fi module, and allows another device to access and communicate with the network. For a creation procedure of the SAP, refer to the existing technology. Details are not described herein again.

After creating the SAP, the Wi-Fi connection tool of the PC broadcasts the SAP information and the HOTSPOT service channel information. The SAP information includes, but is not limited to, an SSID, a MAC address, and the like. Optionally, the HOTSPOT service channel information may also be included in the SAP information. This is not limited in this embodiment.

In this embodiment of this application, Wi-Fi HOTSPOT service channel information may include, but is not limited to, a channel number, a channel bandwidth, a channel frequency, and the like.

S506: In response to a user operation, the mobile phone sends a Wi-Fi HOTSPOT service connection request to the PC.

For example, the user operation may be an operation that the user selects a Wi-Fi HOTSPOT name corresponding to the PC from a Wi-Fi available list to trigger the mobile phone to connect to a hotspot of the PC.

In response to the user operation, an application 4 (for example, a setting application) of the mobile phone sends a Wi-Fi HOTSPOT service connection request to the Wi-Fi connection tool, and the Wi-Fi connection tool sends the Wi-Fi HOTSPOT service connection request to a PC end by using the Wi-Fi chip. After receiving the Wi-Fi HOTSPOT service connection request, the Wi-Fi chip on the PC end forwards the Wi-Fi HOTSPOT service connection request to the Wi-Fi connection tool.

S507: The PC establishes a Wi-Fi HOTSPOT connection with the mobile phone on the DFS channel.

In response to the received Wi-Fi HOTSPOT service connection request, the PC establishes a Wi-Fi HOTSPOT connection with the mobile phone on the DFS channel.

After the Wi-Fi HOTSPOT connection is established between the PC and the mobile phone, the mobile phone may access a Wi-Fi HOTSPOT network of the PC, and performs data communication based on the Wi-Fi HOTSPOT network and a network access service of the PC.

For details that are not explained in detail about the procedure of establishment of the Wi-Fi HOTSPOT connection, refer to the existing technology. Details are not described herein.

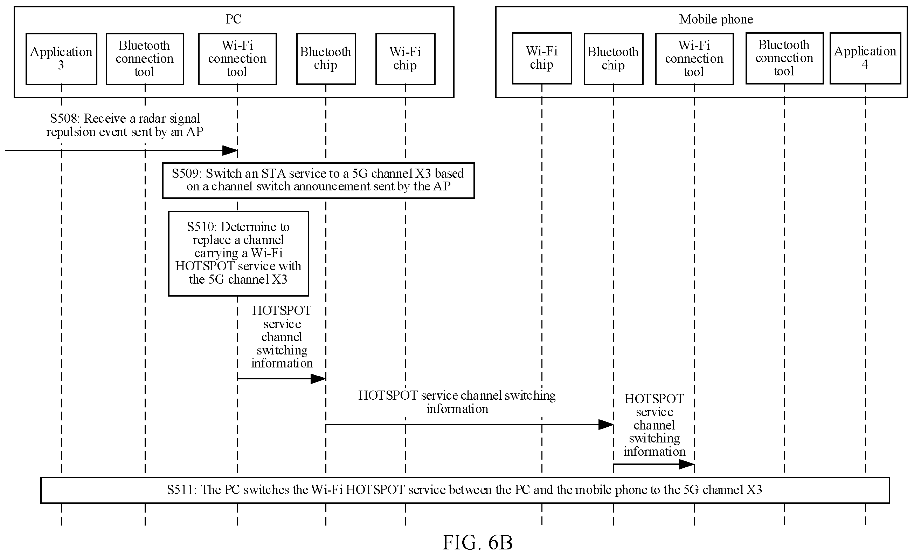

Based on the procedure shown in FIG. 6A, still with reference to FIG. 6B, after the Wi-Fi HOTSPOT service between the PC and the mobile phone is started on the DFS channel, the procedure of the channel selection method provided in this embodiment of this application may further include the following steps.

S508: The Wi-Fi connection tool of the PC receives a radar signal repulsion event sent by the AP.

The AP periodically detects whether radar signal interference occurs in a frequency band of an operating channel on which the AP is located. When the AP detects that there is radar signal interference in the frequency band of the operating channel on which the AP is located, the AP sends the radar signal repulsion event to a terminal device accessing the AP. The radar signal repulsion event indicates that there is radar signal interference on a current operating channel, and the operating channel needs to be switched.

S509: The Wi-Fi connection tool of the PC switches the STA service to a 5G channel X3 based on a channel switch announcement sent by the AP.

When the AP detects that there is radar signal interference in the frequency band of the operating channel on which the AP is located, the AP sends a CSA to the terminal device accessing the AP, so that the terminal device switches the STA service from the DFS channel to a non-DFS channel (for example, the 5G channel X3) based on the CSA.

After the PC receives the CSA sent by the AP, the PC switches the STA service of the PC to an operating channel indicated by the CSA. In this embodiment, the operating channel indicated by the CSA is a non-DFS channel. For details that are not explained in detail about STA service channel switching, refer to the existing technology. Details are not described herein.

S510: After the STA service is switched to the 5G channel X3, the Wi-Fi connection tool of the PC determines to replace a channel carrying the Wi-Fi HOTSPOT service with the 5G channel X3, and sends HOTSPOT service channel switching information to a mobile phone end.

In this embodiment of this application, when a channel of the STA service of the PC is switched, the channel selection module in the Wi-Fi connection tool determines to switch the channel carrying the Wi-Fi HOTSPOT service accordingly. To be specific, when the STA service of the PC is switched to the 5G channel X3 (the non-DFS channel), the channel selection module determines to also replace the channel of the Wi-Fi HOTSPOT service with the 5G channel X3, so that the STA service and the Wi-Fi HOTSPOT service of the PC continue to be implemented on a same frequency and channel.

For example, the HOTSPOT service channel switching information may include information about a channel which is switched to (for example, a channel number), channel switching time, and the like. The HOTSPOT service channel switching information may alternatively be sent based on a Bluetooth connection between the mobile phone and the PC, or may be sent based on a Wi-Fi connection between the mobile phone and the PC. This is not limited in this embodiment.

S511: The PC switches the Wi-Fi HOTSPOT service between the PC and the mobile phone to the 5G channel X3.

After the PC sends the HOTSPOT service channel switching information to the mobile phone end, the PC and the mobile phone re-establish a Wi-Fi HOTSPOT connection based on the information about a channel which is switched to, to switch the channel of the Wi-Fi HOTSPOT service. For details that are not explained in detail about a switching procedure of the channel of the Wi-Fi HOTSPOT service, refer to the existing technology. Details are not described herein.

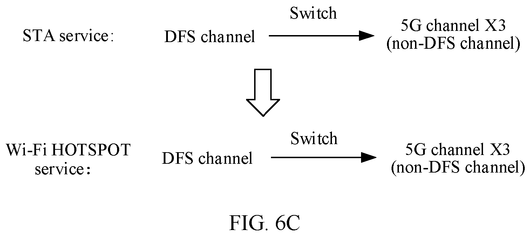

In this embodiment of this application, as shown in FIG. 6C, because the AP detects that there is radar signal interference on the channel (that is, the DFS channel) of the STA service of the PC, when the STA service of the PC is switched from the DFS channel to a non-DFS channel (for example, the 5G channel X3), the Wi-Fi HOTSPOT service between the PC and the mobile phone is also switched from the DFS channel to a corresponding non-DFS channel (for example, the 5G channel X3).

In this way, the operating channel of the Wi-Fi HOTSPOT service of the PC changes as the operating channel of the STA service is switched, and the STA service and the Wi-Fi HOTSPOT service are implemented on a same frequency communication channel, so that higher concurrency efficiency of the STA service and the Wi-Fi HOTSPOT service is ensured, and the operating channel selected by the PC for the Wi-Fi HOTSPOT service is legal and standard.

If the operating channel of the STA service of the PC is switched back to the DFS channel again, the operating channel of the Wi-Fi HOTSPOT service between the PC and the mobile phone may also be switched back to the DFS channel again with the STA service of the PC.

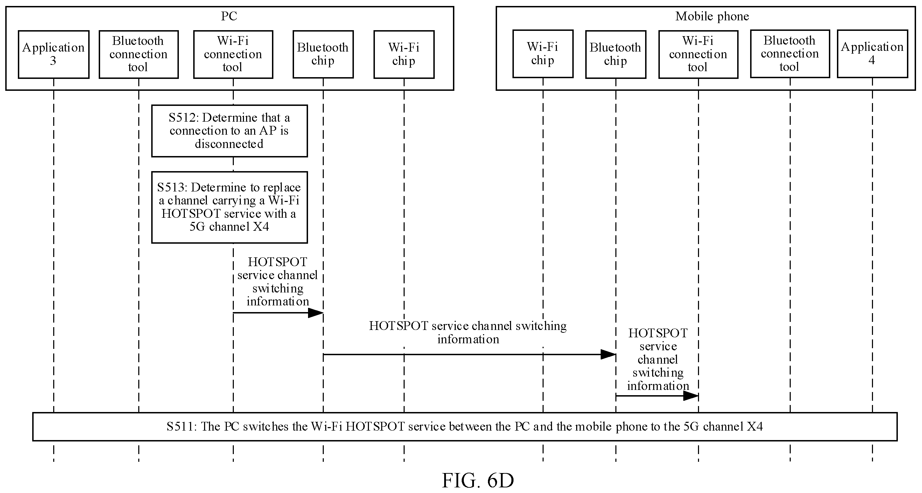

Based on the procedure shown in FIG. 6A, still with reference to FIG. 6D, after the Wi-Fi HOTSPOT service between the PC and the mobile phone is started on the DFS channel, the procedure of the channel selection method provided in this embodiment of this application may further include the following steps.

S512: The Wi-Fi connection tool of the PC determines that a connection between the PC and the AP is disconnected.

For example, the Wi-Fi connection tool of the PC receives a STA disconnection event, and determines that the connection between the PC and the AP is disconnected, that is, the STA service of the PC is interrupted.

S513: The Wi-Fi connection tool of the PC determines to replace the channel carrying the Wi-Fi HOTSPOT service with a 5G channel X4, and sends HOTSPOT service channel switching information to the mobile phone end.

When the AP detects that there is radar signal interference on the DFS channel, because the STA service of the PC is interrupted, the PC cannot receive a radar signal repulsion event sent by the AP, and the PC cannot learn in time whether there is radar signal interference on a current operating channel (that is, the DFS channel) of the Wi-Fi HOTSPOT service, and whether a channel switching operation needs to be performed. Therefore, after it is determined that the connection between the PC and the AP is disconnected, the Wi-Fi connection tool of the PC needs to reselect an operating channel for the Wi-Fi HOTSPOT service, to avoid impact on a radar system because a channel is not switched for the Wi-Fi HOTSPOT service in time.

The channel selection module in the Wi-Fi connection tool may reselect a non-DFS channel for the Wi-Fi HOTSPOT service according to a preset channel selection strategy, generate HOTSPOT service channel switching information based on the reselected non-DFS channel (for example, the 5G channel X4), and send the HOTSPOT service channel switching information to the mobile phone end.

For example, the HOTSPOT service channel switching information may include information about a channel which is switched to (for example, a channel number), channel switching time, and the like. The HOTSPOT service channel switching information may alternatively be sent based on a Bluetooth connection between the mobile phone and the PC, or may be sent based on the Wi-Fi connection between the mobile phone and the PC. This is not limited in this embodiment.

S514: The PC switches the Wi-Fi HOTSPOT service between the PC and the mobile phone to the 5G channel X4.

After the PC sends the HOTSPOT service channel switching information to the mobile phone end, the PC and the mobile phone re-establish a Wi-Fi HOTSPOT connection based on the information about a channel which is switched to, to switch the channel of the Wi-Fi HOTSPOT service. For details that are not explained in detail about a switching procedure of the channel of the Wi-Fi HOTSPOT service, refer to the existing technology. Details are not described herein.

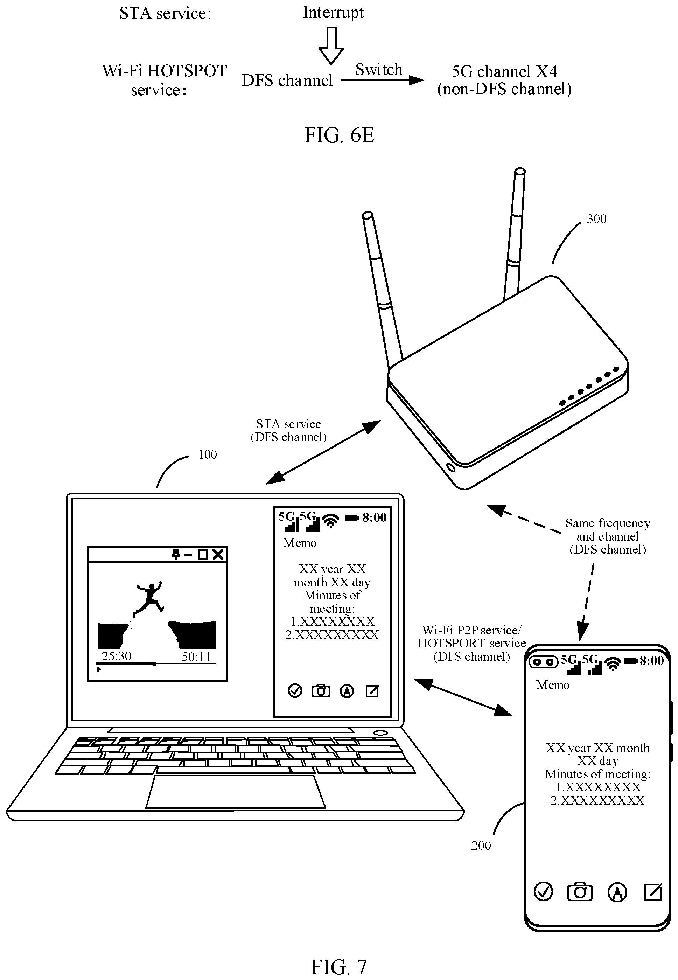

In this embodiment of this application, as shown in FIG. 6E, when the STA service of the PC is interrupted, the Wi-Fi HOTSPOT service between the PC and the mobile phone is switched from the DFS channel to the non-DFS channel, so that legal conformity of the channel of the Wi-Fi HOTSPOT service is ensured.

If the STA service of the PC is restored, that is, a link is re-established for the STA service, and an operating channel of the STA service is the DFS channel, the operating channel of the Wi-Fi HOTSPOT service between the PC and the mobile phone may also be switched back to the DFS channel with the STA service of the PC again. Certainly, if the STA service of the PC is restored, that is, a link is established for the STA service, and the operating channel of the STA service is a non-DFS channel, the operating channel of the Wi-Fi HOTSPOT service between the PC and the mobile phone may also be switched again with the STA service of the PC, so that the Wi-Fi HOTSPOT service and the STA service are implemented based on a same frequency communication channel.

In conclusion, as shown in FIG. 7, before the PC 100 starts a Wi-Fi P2P service or a Wi-Fi HOTSPOT service, if the PC 100 has a STA service, and a bearer channel of the STA service is a DFS channel, the PC 100 may use the DFS channel as a channel carrying the Wi-Fi P2P service or the Wi-Fi HOTSPOT service, to implement the STA service and the Wi-Fi P2P service (or the Wi-Fi HOTSPOT service) of the PC 100 based on a same frequency and channel.

In another implementation, before the PC 100 starts the Wi-Fi P2P service or the Wi-Fi HOTSPOT service, if the PC 100 has a STA service, but a bearer channel of the STA service is a non-DFS channel, the PC 100 may also use the non-DFS channel as a channel carrying the Wi-Fi P2P service or the Wi-Fi HOTSPOT service, to implement the STA service and the Wi-Fi P2P service (or the Wi-Fi HOTSPOT service) of the PC 100 based on a same frequency and channel.

### Scenario 3

In this scenario, before a PC starts a Wi-Fi P2P service or a Wi-Fi HOTSPOT service, the PC does not have a STA service. In this case, the PC may select a legal and standard non-DFS channel for the Wi-Fi P2P service or the Wi-Fi HOTSPOT service based on country code information. After the PC starts the Wi-Fi P2P service or the Wi-Fi HOTSPOT service, if the PC further starts a STA service, and an operating channel of the STA service is a DFS channel, the Wi-Fi P2P service or the Wi-Fi HOTSPOT service of the PC may be switched to the DFS channel with the STA service, to implement the STA service and the Wi-Fi P2P service (or the Wi-Fi HOTSPOT service) of the PC based on a same frequency and channel.

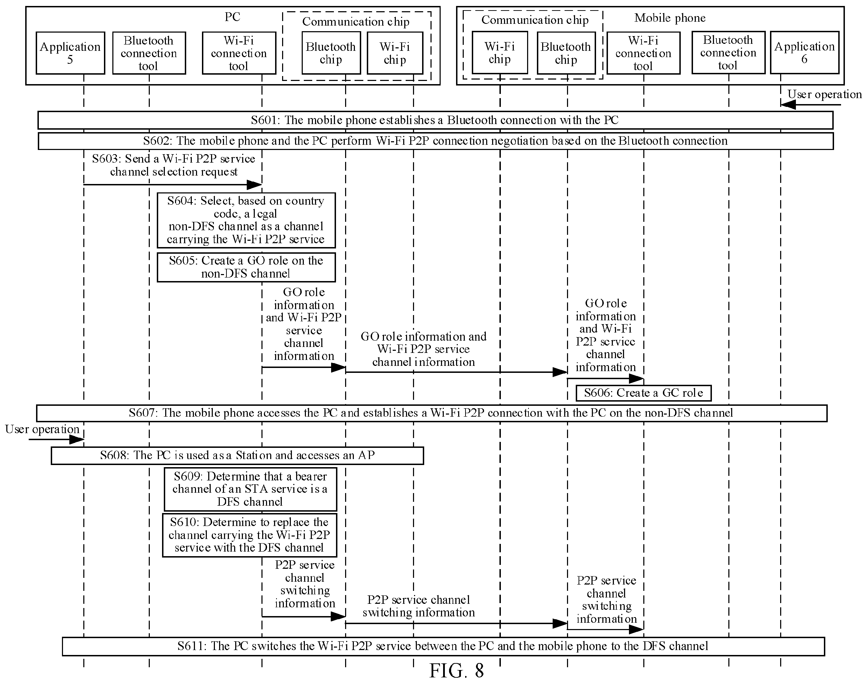

The Wi-Fi P2P service is used as an example. FIG. 8 is an example flowchart of module interaction. As shown in FIG. 8, a procedure of the channel selection method provided in this embodiment of this application includes the following steps.

S601: In response to a user operation, a mobile phone and a PC establish a Bluetooth connection.

The user operation is an operation used for triggering establishment of a Wi-Fi P2P connection between the mobile phone and the PC to implement the Wi-Fi P2P service. A common scenario in which the Wi-Fi P2P connection is established between the mobile phone and the PC includes wireless screen projection, wireless mutual transmission, and the like.

The wireless screen projection scenario is used as an example for description in this embodiment. For example, an operation of a user in a mobile phone screen projection application may be an operation that the user scans two-dimensional code by using a code scanning function in the mobile phone screen projection application. For example, an operation of the user in the mobile phone screen projection application may be an operation of starting the screen projection application by the user, or an operation of holding the mobile phone close to the PC after starting the screen projection application by the user.

In this embodiment of this application, establishing the Bluetooth connection between the mobile phone and the PC is to prepare for establishing the Wi-Fi P2P connection between the mobile phone and the PC. For example, the mobile phone and the PC may exchange information related to the Wi-Fi P2P connection and the like based on the Bluetooth connection between the mobile phone and the PC.

S602: The mobile phone and the PC perform Wi-Fi P2P connection negotiation based on the Bluetooth connection.

After the Bluetooth connection is established between the mobile phone and the PC, the mobile phone and the PC may perform related information negotiation based on the Bluetooth connection, to establish the Wi-Fi P2P connection between the mobile phone and the PC.

Optionally, the mobile phone and the PC perform GO negotiation based on the Bluetooth connection. After the Bluetooth connection is established between the mobile phone and the PC, the mobile phone and the PC may perform GO negotiation based on the Bluetooth connection, to determine which device is a GO node, which device is a GC node, and characteristic information of a P2P group through negotiation. In this embodiment of this application, a result of the GO negotiation completed by the mobile phone and the PC based on the Bluetooth connection is that the PC is a GO node. For details that are not explained in detail about GO negotiation, refer to the existing technology. Details are not described herein.

S603: An application 5 of the PC sends a Wi-Fi P2P service channel selection request to a Wi-Fi connection tool.

S604: The Wi-Fi connection tool of the PC selects, based on country code, a legal non-DFS channel as a channel carrying the Wi-Fi P2P service.

The Wi-Fi connection tool of the PC may obtain the country code information from an AP side, or obtain corresponding country code information based on a current IP address of the PC, or determine corresponding country code information based on country location identification information (for example, country code information, geographical location information, or operator information) obtained from a mobile phone end. A manner in which the PC obtains the country code information is not limited in this embodiment.

In this embodiment, the Wi-Fi connection tool of the PC determines a channel usage strategy of a 5G frequency band based on the country code, and selects, on the 5G frequency band according to the channel usage strategy, a non-DFS channel that is allowed to be used as a channel carrying the Wi-Fi P2P service.

The channel usage strategy stipulates prohibited channels, and the Wi-Fi connection tool may avoid the prohibited channels when selecting the operating channel of the Wi-Fi P2P service. For example, if country code determined by the Wi-Fi connection tool of the PC is country code of China, a 5G channel that is not prohibited by China, such as a channel 165, is selected according to Table 1 as an operating channel for performing the Wi-Fi P2P service with the mobile phone.

For details that are not explained in detail about a procedure of channel selection, refer to the existing technology. Details are not described herein.

S605: The Wi-Fi connection tool of the PC creates a GO role on the non-DFS channel and sends GO role information and Wi-Fi P2P service channel information to the mobile phone end.

S606: The Wi-Fi connection tool of the mobile phone creates a GC role.

S607: The mobile phone accesses the PC and establishes the Wi-Fi P2P connection with the PC on the non-DFS channel.

After the GO negotiation between the PC and the mobile phone is completed, and a PC end selects a legal non-DFS channel corresponding to the Wi-Fi P2P connection and creates a GO on the non-DFS channel, the PC serving as the GO node may exchange link establishment information with the mobile phone serving as the GC node, to complete an operation of access of the GC to the GO. In this way, the PC establishes the Wi-Fi P2P connection with the mobile phone, so that a corresponding Wi-Fi P2P service can be completed between the PC and the mobile phone.

For details that are not explained in detail about the procedure of the access of the GC to the GO and establishment of the Wi-Fi P2P connection, refer to the existing technology. Details are not described herein.

S608: In response to a user operation, the PC is used as a Station and accesses an AP.

The user operation may be an operation of connecting the PC to a wireless network of the AP. For example, the user operation may be an operation that the user clicks, on the PC, a Wi-Fi name corresponding to the AP in an available Wi-Fi list, to trigger the mobile phone to connect to a hotspot of the PC.

For example, the PC sends a Wi-Fi access request to the AP in response to the user operation, and the AP establishes a Wi-Fi connection with the PC based on the Wi-Fi access request, so that the PC is used as a Station and accesses the AP. For a detailed procedure of using the PC as a Station and accessing the AP, refer to the existing technology. Details are not described herein.

It should be noted that when the PC accesses the AP, Wi-Fi P2P between the PC and the mobile phone is not ended.

S609: The Wi-Fi connection tool of the PC determines that a bearer channel of the STA service is a DFS channel.

After the PC is used as a Station and accesses the AP, the Wi-Fi connection tool of the PC determines whether the bearer channel of the STA service is a DFS channel. In this scenario, the bearer channel of the STA service is the DFS channel.

S610: The Wi-Fi connection tool of the PC determines to replace a channel carrying the Wi-Fi P2P service with the DFS channel, and sends P2P service channel switching information to the mobile phone end.

Because a current bearer channel of the STA service of the PC is the DFS channel, it indicates that no radar signal exists in the DFS channel, and the DFS channel may be used for the Wi-Fi P2P service. Therefore, a channel selection module in the Wi-Fi connection tool may replace the channel carrying the Wi-Fi P2P service with the DFS channel.

For example, the P2P service channel switching information may include information about a channel which is switched to (for example, a channel number), channel switching time, and the like.

S611: The PC switches the Wi-Fi P2P service between the PC and the mobile phone to the DFS channel.

After the PC sends the P2P service channel switching information to the mobile phone end, the PC and the mobile phone re-establish a Wi-Fi P2P connection based on the information about a channel which is switched to, to switch the channel of the Wi-Fi P2P service, that is, switch the Wi-Fi P2P service between the PC and the mobile phone to the DFS channel. For details that are not explained in detail about a switching procedure of the channel of the Wi-Fi P2P service, refer to the existing technology. Details are not described herein.

In this way, the STA service and the Wi-Fi P2P service may use the DFS channel at the same time, so that higher concurrency efficiency of the STA service and the Wi-Fi P2P service can be ensured. In addition, it is legal and standard for the Wi-Fi P2P service to currently use the DFS channel.

Similar to scenario 1, after the PC switches the bearer channel of the Wi-Fi P2P service to the DFS channel with the STA service, if the PC receives a radar signal repulsion event sent by the AP and switches the bearer channel of the STA service, the PC continues to switch the bearer channel of the Wi-Fi P2P service to the non-DFS channel with the STA service. If the STA service of the PC is interrupted, the PC switches the bearer channel of the Wi-Fi P2P service to a legal non-DFS channel.

For the Wi-Fi HOTSPOT service of the PC, the same applies to the service. Before the PC starts the Wi-Fi HOTSPOT service, if the PC does not have a STA service, the PC may select a legal and standard non-DFS channel for the Wi-Fi HOTSPOT service based on country code information. After the PC starts the Wi-Fi HOTSPOT service, if the PC further starts a STA service, and an operating channel of the STA service is a DFS channel, the Wi-Fi HOTSPOT service of the PC may be switched to the DFS channel with the STA service, so that the STA service and the Wi-Fi HOTSPOT service of the PC are implemented based on a same frequency and channel.

Similar to scenario 2, after the PC switches the bearer channel of the Wi-Fi HOTSPOT service to the DFS channel with the STA service, if the PC receives a radar signal repulsion event sent by the AP and switches the bearer channel of the STA service, the PC continues to switch the bearer channel of the Wi-Fi HOTSPOT service to the non-DFS channel with the STA service. If the STA service of the PC is interrupted, the PC switches the bearer channel of the Wi-Fi HOTSPOT service to a legal non-DFS channel.

In another optional implementation, after the PC is used as a Station and accesses the AP, if the bearer channel of the STA service is not a DFS channel, for example, if the bearer channel of the STA service is a 5G channel X5, the PC may also switch a bearer channel of the Wi-Fi P2P service or the Wi-Fi HOTSPOT to the 5G channel X5. This is not limited in this embodiment.

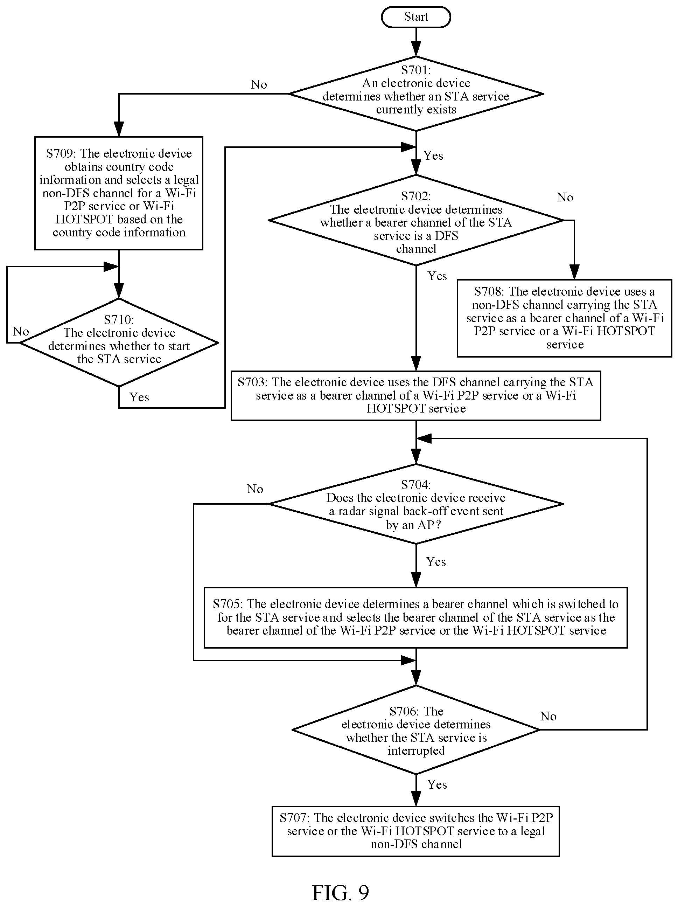

FIG. 9 is an example flowchart of a channel selection method. As shown in FIG. 9, in the channel selection method provided in this embodiment of this application, an electronic device selects a bearer channel of a Wi-Fi P2P service or a Wi-Fi HOTSPOT service. Specifically, the following procedure steps may be included.

S701: The electronic device determines whether a STA service currently exists. If the STA service exists, S702 is performed, or if no STA service exists, S709 is performed.

S702: The electronic device determines whether the bearer channel of the STA service is a DFS channel. If the bearer channel of the STA service is a DFS channel, S703 is performed, or if the bearer channel of the STA service is not a DFS channel, S708 is performed.

S703: The electronic device uses a DFS channel carrying the STA service as the bearer channel of the Wi-Fi P2P service or the Wi-Fi HOTSPOT service.

S704: Does the electronic device receive a radar signal back-off event sent by an AP? If the electronic device receives the radar signal back-off event, S705 is performed, or if the electronic device does not receive the radar signal back-off event, S706 is performed.

S705: The electronic device determines a bearer channel which is switched to for the STA service, and switches the bearer channel of the Wi-Fi P2P service or the Wi-Fi HOTSPOT service to the bearer channel of the STA service.

The bearer channel which is switched to for the STA service may be a DFS channel, or may be a non-DFS channel.

In this way, the bearer channel of the Wi-Fi P2P service or the Wi-Fi HOTSPOT service is switched along with the STA service, so that legality of the bearer channel of the Wi-Fi P2P service or the Wi-Fi HOTSPOT service can be ensured.

S706: The electronic device determines whether the STA service is interrupted. If the STA service is interrupted, S707 is performed, or if the STA service is not interrupted, S704 is performed.

S707: The electronic device switches the Wi-Fi P2P service or the Wi-Fi HOTSPOT service to a legal non-DFS channel.

The electronic device may select a legal non-DFS channel for the Wi-Fi P2P service or Wi-Fi HOTSPOT based on country code information.

S708: The electronic device uses the non-DFS channel carrying the STA service as the bearer channel of the Wi-Fi P2P service or the Wi-Fi HOTSPOT service.

S709: The electronic device obtains the country code information and selects a legal non-DFS channel for a Wi-Fi P2P service or Wi-Fi HOTSPOT based on the country code information.

S710: The electronic device determines whether to start the STA service. If the electronic device determines to start the STA service, 702 is performed, or if the electronic device determines not to start the STA service, S710 is performed.

Before the Wi-Fi P2P service or the Wi-Fi HOTSPOT service ends, the electronic device determines whether to start the STA service. If the electronic device starts the STA service, the bearer channel of the Wi-Fi P2P service or the Wi-Fi HOTSPOT service may be switched with the STA service, to implement the Wi-Fi P2P service or the Wi-Fi HOTSPOT service with the STA service based on a same frequency and channel.

For details that are not explained and described in this procedure, refer to the foregoing descriptions. Details are not described herein again.

An embodiment further provides a computer storage medium. The computer storage medium stores computer instructions. When the computer instructions are run on an electronic device, the electronic device is enabled to perform the foregoing related method steps, to implement the channel selection method in the foregoing embodiments.

An embodiment further provides a computer program product. When the computer program product is run on a computer, the computer is enabled to perform the related steps, to implement the channel selection method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus is run, the processor may execute the computer-executable instructions stored in the memory, so that the chip performs the channel selection method in the method embodiments.

The electronic device (for example, a PC), the computer storage medium, the computer program product, or the chip provided in embodiments may be configured to perform the corresponding method provided above. Therefore, for beneficial effects that can be achieved, refer to the beneficial effects of the corresponding method provided above. Details are not described herein again.

Based on the foregoing descriptions of the implementations, a person skilled in the art may understand that for a purpose of convenient and brief description, division into the foregoing functional modules is merely used as an example for illustration. During actual application, the foregoing functions may be allocated to different functional modules for implementation based on a requirement. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or the unit division is merely logical function division, and there may be another division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical features, without departing from the scope of the technical solutions of embodiments of this application.

## Claims

1. A channel selection method, applied to a first electronic device, wherein the method comprises:
determining whether the first electronic device currently has a station STA service when a Wi-Fi peer-to-peer P2P connection is established with a second electronic device;
determining, when the first electronic device currently has a first STA service, that a bearer channel of the first STA service is a first channel, wherein the first channel is a dynamic frequency selection DFS channel;
sending information of the first channel to the second electronic device; and
establishing the Wi-Fi P2P connection with the second electronic device on the first channel.

2. The method according to claim 1, further comprising:
receiving first information sent by a wireless access point, wherein the first information indicates the first electronic device to switch the first STA service to a second channel, and the second channel is a non-DFS channel;
switching the bearer channel of the first STA service to the second channel;
sending second information to the second electronic device, wherein the second information indicates the second electronic device to switch a Wi-Fi P2P service to the second channel; and
switching the Wi-Fi P2P service with the second electronic device to the second channel.

3. The method according to claim 1 or 2, further comprising:
determining that the first STA service is interrupted;
selecting a third channel, and sending third information to the second electronic device, wherein the third information indicates the second electronic device to switch the Wi-Fi P2P service to the third channel, and the third channel is a non-DFS channel; and
switching the Wi-Fi P2P service with the second electronic device to the third channel.

4. The method according to claim 3, wherein the selecting a third channel comprises:
selecting the third channel based on country code information and a preset channel selection strategy.

5. The method according to claim 1, further comprising:
determining, when the first electronic device currently has the first STA service, that the bearer channel of the first STA service is a fourth channel, wherein the fourth channel is a non-DFS channel;
sending information of the fourth channel to the second electronic device; and
establishing a Wi-Fi P2P connection with the second electronic device on the fourth channel.

6. The method according to claim 1, further comprising:
selecting a fifth channel based on country code information and a preset channel selection strategy when the first electronic device does not currently have the STA service, wherein the fifth channel is a non-DFS channel;
sending information of the fifth channel to the second electronic device; and
establishing a Wi-Fi P2P connection with the second electronic device on the fifth channel.

7. The method according to claim 6, wherein after the establishing a Wi-Fi P2P connection with the second electronic device on the fifth channel, the method further comprises:
accessing a wireless access point to perform a second STA service;
determining that a bearer channel of the second STA service is a sixth channel;
sending fourth information to the second electronic device, wherein the fourth information indicates the second electronic device to switch a Wi-Fi P2P service to the sixth channel; and
switching the Wi-Fi P2P service with the second electronic device to the sixth channel.

8. The method according to claim 7, wherein the sixth channel is a DFS channel or a non-DFS channel.

9. The method according to claim 1, further comprising:
when starting a Wi-Fi hotspot service of the first electronic device, determining whether the first electronic device currently has the STA service;
determining, when the first electronic device currently has a third STA service, that a bearer channel of the third STA service is a seventh channel, wherein the seventh channel is a DFS channel;
broadcasting information of the seventh channel; and
establishing a Wi-Fi hotspot connection with a third electronic device on the seventh channel.

10. The method according to claim 9, further comprising:
receiving fifth information sent by a wireless access point, wherein the fifth information indicates the first electronic device to switch the third STA service to an eighth channel, and the eighth channel is a non-DFS channel;
switching the bearer channel of the third STA service to the eighth channel;
sending sixth information to the third electronic device, wherein the sixth information indicates the third electronic device to switch a Wi-Fi hotspot service to the eighth channel; and
switching the Wi-F hotspot service with the third electronic device to the eighth channel.

11. The method according to claim 9 or 10, further comprising:
determining that the third STA service is interrupted;
selecting a ninth channel, and sending seventh information to the second electronic device, wherein the seventh information indicates the second electronic device to switch a Wi-F hotspot service to the ninth channel, and the ninth channel is a non-DFS channel; and
switching the Wi-F hotspot service with the third electronic device to the ninth channel.

12. The method according to claim 9, further comprising:
selecting a tenth channel based on country code information and a preset channel selection strategy when the first electronic device does not currently have the STA service, wherein the tenth channel is a non-DFS channel;
broadcasting information of the tenth channel; and
establishing a Wi-Fi hotspot connection with the third electronic device on the tenth channel.

13. An electronic device, comprising:
one or more processors;
a memory, and
one or more computer programs, wherein the one or more computer programs are stored in the memory, and when the computer programs are executed by the one or more processors, the electronic device is enabled to perform the channel selection method according to any one of claims 1 to 12.

14. A chip system, used in an electronic device, wherein the chip system comprises instructions and at least one processor, and the at least one processor runs the instructions, to enable the electronic device to perform the channel selection method according to any one of claims 1 to 12.

15. A computer-readable storage medium, comprising a computer program, wherein when the computer program is run on an electronic device, the electronic device is enabled to perform the channel selection method according to any one of claims 1 to 12.
